# NEUE EUROPÄISCHE PATENTSCHRIFT

(11) **EP 0 490 940 B2**
(45) Veröffentlichungstag und Bekanntmachung des Hinweises auf die Entscheidung über den Einspruch: **05.07.2000**
(45) Hinweis auf die Patenterteilung: 10.05.1995
(21) Anmeldenummer: 90913193.0
(22) Anmeldetag: 06.09.1990
(51) Int. Cl.: C08F 291/12, C08F 283/04, C08F 283/00

(54) **VERFAHREN ZUM PFROPFEN VON STICKSTOFFHALTIGEN POLYMEREN UND DIE DABEI ERHALTENEN POLYMEREN**
PROCESS FOR GRAFTING OF NITROGEN-CONTAINING POLYMERS, AND POLYMERS THUS OBTAINED
PROCEDE POUR LE GREFFAGE DE POLYMERES AZOTES ET POLYMERES AINSI OBTENUS

(30) Priorität: 06.09.1989 DE 3929647
(43) Veröffentlichungstag der Anmeldung: 24.06.1992
(73) Patentinhaber: SARTORIUS AG, 37075 Göttingen (DE)
(72) Erfinder: HÖRL, Hans-Heinrich, D-3406 Bovenden (DE); NUSSBAUMER, Dietmar, D-3400 Göttingen (DE); WÜNN, Eberhard, D-3400 Göttingen (DE)
(74) Vertreter: Müller-Boré & Partner Patentanwälte
(86) Internationale Anmeldenummer: EP9001500
(87) Internationale Veröffentlichungsnummer: WO9103506

(56) Entgegenhaltungen:
- DE-A- 3 740 871
- Journal of Applied Polymer Science, Band 26, Nr. 8, August 1981, M.K. MISHRA et al.: "Graft Copolymerization of Acrylamide onto Nylon 6 Using Quinquevalent Vanadium Ion", Seiten 2593-2600
- Makromolekulare Chemie, Bd. 180, 1979, K. VAN PHUNG et al.:"Pfropfung von Vinylverbindungen auf Polyamide", Seiten 1825-1827
- Biotechnology, vol. 6, 1988, pp. 779-782

## Beschreibung

Die Erfindung betrifft ein Verfahren zum Pfropfen von stickstoffhaltigen Polymeren, an deren Stickstoffatomen substituierbare Wasserstoffatome sitzen, mit ethylenisch ungesättigten Monomeren. Die Erfindung betrifft weiterhin mit ethylenisch ungesättigten Monomeren gepfropfte Formkörper aus stickstoffhaltigen Polymeren, dadurch gekennzeichnet, daß die Formkörper durch Pfropfen von als mikroporöse Membranen ausgebildeten Formkörpern mit einem Oberflächen/Massen-Verhältnis im Bereich zwischen 5 und 50 m²/g hergestellt sind und
a) durch einen Pfropfgrad von 1 bis 5 % in den Oberflächeneigenschaften,
b) durch einen Pfropfgrad von 5 bis 45 % in der adsorptiven Bindungskapazität oder
c) durch einen Pfropfgrad von 10 bis 700 % in den Bulkeigenschaften modifiziert sind.

### Stand der Technik.

Nach einem verbreiteten Pfropfverfahren werden in die Kette des Basispolymeren, beispielsweise durch energiereiche Strahlung radikalische Gruppen eingeführt, an denen die Pfropfung durch Radikalkettenpolymerisation erfolgen kann.

Die Erzeugung der den Ausgangspunkt der Pfropfung bewirkenden aktivierten, beispielsweise radikalischen Gruppen erfolgt bei diesen Pfropfverfahren ungezielt, d.h. die Pfropfung erfolgt nicht ausschließlich am einer bestimmten Gruppierung der Kette des Basispolymeren, wie z.B. am Stickstoffatom, sonderen and sämtlichen durch hochenergelische Strahlung aktivierbaren Stellen der Polymerkette, z.B. auch an Methylengruppen. Daneben erfolgt durch hochenergetische Strahlung ein mehr oder weniger starker Abbau von Polymerketten, wobei infolge der dadurch bedingten Erniedrigung des Polymerisationsgrades eine Schädigung der mechanischen Festigkeit des Basispolymeren eintritt. Ebenfalls unerwünschte Nebenraktionen bei der strahleninduzierten Pfropfung sind Vernetzungsreaktionen, die zu einer Versprödung des Materials führen.

Andere Verfahren der Pfropfcopolymerisation beruhen auf der Aktivierung unter Radikalbildung durch starke Oxidationsmittel, wie z.B. Ce^{IV}-Salze. Dieses Verfahren ist nur bei sehr niedrigen pH-Werten, nämlich unter pH=2 anwendbar, weil andernfalls eine hydrolytische Ausfällung des Ce^{IV}-Salzes eintritt. Die Anwendung dieses Verfahrens bei den für das erfindungsgemäße Verfahren vorgesehenen Polymeren führt zu einer hydrolytischen Schädigung dieser Polymeren, wobei ebenfalls eine Verminderung der mechanischen Festigkeit infolge von Herabsetzung des Polymerisationsgrades zu beobachten ist. Außerdem ist auch nach diesem Verfahren keine gezielte Pfropfung zur Erhöhung der chemischen Beständigkeit des Basispolymeren möglich.

Wieder andere Verfahren der Pfropfpolymerisation beruhen auf der Kettenübertragung, indem durch einen Radikalinitiator eine Homopolymerisation des Monomeren in Gegenwart des zu pfropfenden Basispolymeren induziert wird, wobei in der Regel hohe Temperaturen angewandt werden müssen (70-80 °C). Die Pfropfung erfolgt in diesem Fall durch Wechselwirkung des wachsenden Polymerradikals mit dem Basispolymer. Die Pfropfstelle läßt sich auch in diesem Fall nicht gezielt beinflussen. Ein weiterer Nachteil dieser Pfropfverfahren besteht darin, daß nur ein geringer Teil des eingesetzten Monomeren für die Pfropfung verbraucht wird, während gleichzeitig ein erheblicher Anteil an Homopolymer entsteht. Die Bildung von Homopolyomer ist deshalb unerwünscht, weil dadurch die Menge des erforderlichen Monomeren erhöht wird, was die Wirtschaftlichkeit des Verfahrens beeinträchtigt, und außerdem ein eigener Verfahrensschritt zur Entfernung des Homopolymeren erforderlich wird.

Den bisher genannten Pfropfverfahren ist gemeinsam, daß die Pfropfung an keiner streng definierten Stelle des Basispolymeren, insbesondere nicht bevorzugt am Stickstoffatom eintritt. Der chemische Charakter der entsprechenden Bindungen, wie der Peptidgruppe und der Carbonamidsäuregruppe, wird daher nicht verändert und ein positiver Einfluß auf die chemische Stabilität dieser Bindungen kann daher nicht erfolgen.

Ferner ist bekannt, Polyamide mit Acrylamid oder Acrylnitril in der Weise zu pfropfen, daß in einer ersten Verfahrensstufe die Wasserstoffatome an den Stickstoffatomen durch Chloratome ersetzt werden. Die halogensubstituierten Polyamide werden dann durch Hydrazin oder Eisen-II-Salze wieder in das Ausgangspolymere überführt, wobei ein radikalischer Übergangszustand am Stickstoff auftritt. In Gegenwart der genannten Monomere erfolgt, wie auch bei anderen Redox-initiierten Polymerisationsverfahren, eine Radikalkettenpolymerisation am Stickstoff. Diese Reaktion wird beispielsweise von K.V. Phung und R.C. Schulz in "Makromolekulare Chemie", 180, 1825 (1979) beschrieben. Sie wurde in der genannten Arbeit angewandt, um den erwähnten radikalischen Übergangszustand bei der Reduktion nachzuweisen.

Eine andere Arbeit, welche die Pfropfung auf N-halogenierten Polyamiden zum Gegenstand hat, beschreibt die Initiierung durch Metallcarbonyle (C.H. Bamford, F.C. Duncan, R.J.W. Reynolds in "J.Polym. Sci" Teil C, 419-432 (1968). Diese bekannten Verfahren sind relativ aufwendig.

Aus der EP-A-0 052 156 ist eine mit hoher Ausbeute durchführbare Pfropfung von Polyamiden mit einem Monomerengemisch unter Redox-Bedingungen bei Verwendung von Peroxiden und z.B. Natrium-dithionit und Formalin bekannt.

M.K. Mishara et.al. (Journal of Applied Polymer Science, Band 26, 2593-2600 (1981) beschreiben die Pfropfung von Nylon-6 mit Acrylamid in Gegenwart von Vanadium-V-Ionen als Initiator und die Beeinflussung dieser Pfropfung durch unterschiedliche Reaktionsbedingungen, wobei sie bezüglich von Tetrachlorkohlenstoff einen inhibierenden Einfluß auf die Pfropfung feststellten.

### Aufgabenstellung.

Die Erfindung hat sich daher die Aufgabe gestellt, ein sehr einfach durchzuführendes Verfahren zum Pfropfen von stickstoffhaltigen Polymeren zu schaffen, mit dessen Hilfe es möglich ist, stickstoffhaltige Polymere einheitlich oder gezielt an der Oberfläche von Formkörpern zu pfropfen, um die Eigenschaften dieser stickstoffhaltigen Ausgangsmaterialien in einer gewünschten Weise zu modifizieren.

Die Veränderungen der Oberflächeneigenschaften besteht sowohl in der Erhöhung der chemischen Beständigkeit des Oberflächenbereichs, die in jedem Falle erfolgen soll, als auch in der Beeinflussung sonstiger chemischer und/oder physikalischer Oberflächeneigenschaften, insbesondere des Benetzungs- und Adsorptionsverhaltens, ohne daß die bei herkömmlichen Pfropfverfahren auftretenden Nachteile wirksam werden. Diese Nachteile sind, explizit aufgedrückt: Kettenabbau und Vernetzungsreaktionen am Basispolymer und/oder hoher Anteil an Homopolymerisat, sowie unbeabsichtigtes bzw. unkontrollierbares Fortschreiten der Pfropfung in die Tiefe der Oberfläche.

Es ist daher eine weitere Aufgabe der Erfindung, ein Verfahren zu schaffen, das es im Falle wenig kompakter Formkörper, insbesondere mikroporöser Membranen mit einem Oberflächen/Massenverhältnis im Bereich bis zu 50 m²/g ermöglicht, wahlweise die Pfropfung über die gesamte Polymermatrix durchzuführen oder auf die außenliegenden Kettenbereiche des Basispolymeren zu beschränken.

Soweit es Aufgabe der Erfindung ist, ein Verfahren zur Erhöhung der chemischen Stabilität des Basispolymeren, insbesondere im Oberflächenbereich von Formkörpern zu schaffen, ist darunter eine Erhöhung der Beständigkeit gegen Kettenabbau durch oxidativen und hydrolytischen Abbau sowie durch Strahlenschädigung zu verstehen. Insbesondere besteht die Aufgabe des erfindungsgemäßen Verfahrens darin, die labilsten Gruppierungen in der Hauptkette der Basispolymeren wie die Peptid- bzw. Carbamidsäuregruppe, im Oberflächenbereich in eine gegen den chemischen Angriff weniger anfällige Form zu überführen, um einen Kettenabbau des Basispolymeren zu vermeiden. Durch Stabilisierung der Oberflächenschicht sollen auch die darunter liegenden nichtstabilisierten Bereiche des Basispolymeren vor dem chemischen Angriff geschützt werden. Dadurch ist es nicht erforderlich, das gesamte Basispolymer des Formkörpers zu stabilisieren, so daß dessen mechanische Eigenschaften in diesem Bereich nicht verändert werden. Es ist ein wesentlicher Teil der Aufgabenstellung, daß die vorgenannten Stabilisierungseffekte ohne Verwendung von durch Lösungsmittel extrahierbaren Stabilisatoren erreicht werden.

Eine weitere Aufgabe der Erfindung ist ein Verfahren zur Herstellung von Verbundkörpern, wobei der zur Pfropfung verwendete Formkörper oberflächlich mit einer Schicht des Pfropfpolymeren versehen ist, die mit dem Formkörper chemisch verbunden ist und im wesentlichen frei ist von Einzelketten des Basispolymeren, so daß die Quellungseigenschaften der Schicht des Pfropfpolymeren ausschließlich von der Art des für die Pfropfung verwendeten Monomeren bestimmt werden und sich somit in charakteristischer Weise von denen des Basispolymeren unterscheiden. Insbesondere sind darunter Pfropfpolymere zu verstehen, die eine hohe Quellbarkeit in wäßrigen Medien aufweisen, so daß sie, wenn sie mit chemischen Gruppen versehen werden, die sie zur reversiblen oder irreversiblen Bindung von bestimmten Zielsubstanzen befähigen, diesen chemischen Gruppen für die betreffenden Zielsubstanzen auch im Inneren dieser Schicht zugänglich sind. Bei den Zielsubstanzen kann es sich beispielsweise um Proteine handeln, bei den zur reversiblen Bindung befähigten Gruppen um ionische Gruppen oder Affinitätsliganden, bei den zur irreversiblen Bindung befähigten Gruppen um solche, die mit Amino- oder Sulfhydrylgruppen von Proteinen unter milden Bedingungen chemische Bindungen eingehen können und nach dem Stand der Technik bekannt sind. Dadurch, daß nicht nur die Oberfläche, sondern auch das Innere der aufgepfropften Polymerschicht für die Zielsubstanzen zugänglich ist, soll eine besonders hohe Bindungskapazität des Verbundmaterials erreicht werden.

Während die Anwendungsgebiete für vorstehend genannte Verbundmaterialien auf dem Gebiet der adsorptiven Stofftrennung liegen, betrifft eine weitere Aufgabenstellung der Erfindung den textilen Sektor. Die Zielsetzung bei der Herstellung der Verbundkörper besteht hier darin, die Formkörper, insbesondere Textilfasern, mit einer aufgepfropften Polymerschicht zu versehen, die sich färbetechnisch vom Basispolymeren in der gewünschten Weise unterscheidet. Ein Beispiel für einen derartigen Anwendungsfall liegt dann vor, wenn die aufgepfropfte Polymerschicht durch eine Klasse von Farbstoffen angefärbt werden soll, für die das Basispolymer entweder keine oder nur eine geringe Affinität besitzt. Dies ist textiltechnisch insbesondere dann wünschenswert, wenn Mischfasern in einem Arbeitsgang gefärbt werden sollen, z.B. Mischfasern aus Polyamiden und Baumwolle in einer Färbeflotte mit Reaktivfarbstoffen für Cellulose.

Es ist eine weitere Aufgabe der Erfindung, ein Verfahren zur gezielten Veränderung der Benetzungseigenschaften von Formkörpern zu schaffen, insbesondere in Richtung einer Erhöhung der Wasserbenetzbarkeit sowie der Benetzbarkeit durch Flüssigkeit von noch höherer Oberflächenspannung als der von Wasser, wie zum Beispiel von Elektrolytlösungen in hoher Konzentration. Diese Zielsetzung ist auf allen bisher genannten Anwendungsgebieten von Bedeutung. Neben einer Erhöhung der Wasserbenetzbarkeit besteht dabei auch die Aufgabe, ein Verfahren zur Herabsetzung des Adsorptionsvermögens für lipophile Substanzen zu schaffen, wobei im Falle von mikroporösen Membranen in erster Linie, aber nicht auschließlich, die Proteinadsorption herabgesetzt werden soll, im Falle der Textilfasern die Anschmutzung durch fettartige Stoffe. In beiden Fällen ist eine Folge der Herabsetzung der Affinität für lipophile Substanzen, daß, wenn eine derartige Adsorption dennoch einmal stattgefunden hat, diese wieder leicht rückgängig gemacht werden kann. Im Falle der Textilfasern äußert sich dies darin, daß das Waschen unter wesentlich milderen Bedingungen erfolgen kann, als ohne eine derartige Modifizierung der Oberfläche, Ebenso werden Filtermembranen durch eine derartige Modifizierung nach Verstopfung leichter wieder freispülbar.

Ebenso ist es eine Aufgabe der Erfindung, ein Verfahren zur Beeinflussung des Zeta-Potentials entweder in Richtung eines negativen oder eines positiven Potentials zu ermöglichen. Auch das Zeta-Potential hat sowohl bei Filtermaterialine als auch bei Textilien einen erheblichen Einfluß auf die Gebrauchseigenschaften, indem es, je nach den kontaktierenden Medien, die Verschmutzungseigenschaften bestimmt. In engem Zusammenhang mit dem Zeta-Potential steht auch die elektrostatische Aufladung der Formkörper, die durch das erfindungsgemäße Verfahren ebenfalls herabgesetzt werden soll, indem durch die Einführung von ionischen Gruppen in der Oberfläche die Oberflächenleitfähigkeit erhöht wird.

Eine weitere Aufgabe der Erfindung besteht im Falle wenig kompakter Formkörper, bei denen sich die Gesamtheit des Basispolymeren in einer oberflächennahen Schicht befindet, diesen Formkörper zur Gänze in ein Pfropfcopolymer umzuwandeln, wobei ein isotropes Wachstum dieses Formkörpers unter Erhaltung seiner ursprünglichen Form eintritt und der gepfropfte Formkörper sich in seinen chemischen und gegebenenfalls auch mechanischen Eingenschaften und/oder Löslichkeitseigenschaften in einer gewünschten Weise von dem Ausgangsprodukt unterscheidet. Neben einer Änderung der chemischen Stabilität können diese Eigenschaftsänderungen sowohl in einer erhöhten als auch einer verminderten Löslichkeit in bestimmten Lösungsmitteln bestehen. Hinsichtlich der mechanischen Eigenschaften kann sowohl eine Erhöhung der mechanischen Festigkeit als auch eine Erhöhung der Flexibilität erreicht werden.

### Lösung der Aufgabe.

Diese Aufgaben werden durch das erfindungsgemäße Verfahren zum Pfropfen von stickstoffhaltigen Polymeren, an deren Stickstoffatomen substituierbare Wasserstoffatome sitzen, mit ethylenisch ungesättigten Monomeren in der Weise gelöst, daß die Monomeren mit den Polymeren in Gegenwart eines Wasser enthaltenden Mediums, Tetrachlorkohlenstoff und eines Reduktionsmittels zur Reaktion gebracht werden.

Je nach der Reaktionszeit erfolgt die Pfropfung entweder nur an der Oberfläche des Ausgangspolymeren (bei kurzen Reaktionszeiten) oder breitet sich in zunehmendem Maße in Richtung auf das Innere des Ausgangspolymeren aus. Soll ein gleichmäßig gepfropftes Produkt hergestellt werden, wird in zweckmäßiger Weise von einem pulverisierten oder faserförmigen Ausgangspolymeren ausgegangen, um die erforderlichen Reaktionszeiten kurz zu halten.

Der Chemismus, der dem erfindungsgemäßen Verfahren zugrundeliegt, ist ein anderer, als derjenige der weiter oben beschriebenen N-Halogenierung und entzieht sich derzeit noch der Deutung. Es ist zwar die Pfropfung ethylenisch ungesättigter Monomerer an Cellulose, Seide oder Nylon in Gegenwart von Wasser und Tetrachlorkohlenstoff, bekannt allerdings unter Anwendung erhöhter Temperaturen und langer Reaktionszeiten, jedoch ohne Verwendung eines Reduktionsmittels, das jedoch zur Durchführung des erfindungsgemäßen Verfahrens unbedingt eingesetzt werden muß. In Abwesenheit des Reduktionsmittels erfolgt, auch bei Ausschluß von Sauerstoff, unter den bei der Anwendung des erfindungsgemäßen Verfahrens bevorzugten niedrigen Temperaturen (0-50 °C, besonders bevorzugt nahe Raumtemperatur) keinerlei Pfropfung.

In zweckmäßiger Weise wird das erfindungsgemäße Verfahren in Wasser als Reaktionsmedium durchgeführt, es kommen jedoch auch Medien in Frage, die neben Wasser, dem Monomer und Tetrachlorkohlenstoff noch andere Bestandteile, wie beispielsweise Alkohole oder Ketone enthalten, um den Löslichkeitsbereich des verwendeten Monomeren zu erweitern. Die Begrenzung des Zusatzes an organischen Lösungsmitteln ist gegeben durch die Löslichkeit des verwendeten Reduktionsmittels, die bei Senkung des Wassergehaltes abnimmt.

Die Löslichkeit des Tetrachlorkohlenstoffs in Wasser beträgt etwa 0.08 Gew.-% und ist für die Durchführung der Pfropfung ausreichend.

### Art der Polymere.

Das erfindungsgemäße Verfahren ist anwendbar auf aliphatische Polyamide, wie Nylon 4, Nylon 6, Nylon 6,6 und höhere aliphatische Polyamide, aber auch aromatische Polyamide, die beispielsweise unter den Handelsnamen Nomex® und Kevlar® bekannt sind. Der Polymerklasse der Polyamide ist die wiederkehrende Struktureinheit der Peptidbindung gemeinsam:

-CO-NH-

Die Peptidbindung kann alleine oder auch in Verbindung mit anderen wiederkehrenden Struktureinheiten auftreten, wie z.B. in Kombination mit der Sulfongruppe:

-SO₂-

Polymere mit Peptidgruppen und Sulfongruppen sind als Polysulfonamide bekannt und können durch Polykondensation von Diaminodiarylsulfonen mit aromatischer Dicarbonsäure hergestellt werden.

Eine weitere Gruppe von Polymeren, die nach dem erfindungsgemäßen Verfahren gepfropft werden können, sind die Polyurethane. Die Polyurethane unterscheiden sich von den Polyamiden dadurch, daß sie anstelle der Peptidbindung die Carbamidsäuregruppe

-O-CO-NH-

aufweisen.

Zum Unterschied von den bisher genannten für das erfindungsgemäße Verfahren geeigneten Polymeren, die den Stickstoff in der Hauptkette enthalten, sind auch solche Polymere geeignet, die den Stickstoff in einer Seitenkette enthalten. Dabei kann es sich entweder um primäre oder sekundäre Aminogruppen handeln:

-NH₂ , -NHR

nicht aber um tertiäre Aminogruppen. Ebenso kann es sich bei den stickstoffhaltigen Gruppen der Seitenkette um primäre oder sekundäre Amidgruppen handeln:

-CO-NH₂ , -CO-NHR

Den für die Anwendung des erfindungsgemäßen Verfahrens geeigneten Polymeren ist gemeinsam, daß sie am Stickstoff ein Wasserstoffatom aufweisen, das durch ein Halogenatom, insbesondere ein Chlor- oder Bromaton substituierbar ist, Dabei ist ungeklärt, nach welchem Mechanismus die Pfropfung abläuft und welche Bedeutung die Halogensubstituierbarkeit hat.Es wurde jedoch festgestellt, daß für das erfindungsgemäße Verfahren dieselben Polymeren geeignet sind, wie für ein in einer Parallelanmeldung beschriebenes Verfahren, das als obligaten ersten Schritt die Halogensubstitution des Stickstoffs aufweist.

Die für die Erfindung vorgesehenen Polymere weisen eine Reihe von Vorzügen auf, die zu ihrem breiten technischen Einsatz geführt haben. So sind viele Vertreter der Polyamide durch eine hohe mechanische Festigkeit und einen hohen Erweichungspunkt gekennzeichnet, während die Polyurethane sehr günstige elastische Eigenschaften aufweisen. Demgegenüber weisen diese Polymere für die praktische Anwenung gewisse Nachteile auf, die zum Teil auf die begrenzte Stabilität der Peptid- bzw. der Carbamidsäuregruppe zurückzuführen sind. Ein Abbau dieser Gruppen, beispielsweise durch hydrolytische, oxidative oder strahlenchemische Einflüsse führt zu nachteiligen Veränderungen der Eigenschaften, wodurch der Einsatzbereich dieser Polymere begrenzt wird.

### Art der Monomeren.

Für die Anwendung der Erfindung sind einfach oder mehrfach ethylenisch ungesättigt Monomere geeignet, sofern sie eine, wenn auch geringe, Löslichkeit in überwiegend wäßrigen Systemen aufweisen. Unter überwiegend wäßrigen Systemen sind wäßrige System zu verstehen, die außer dem Monomeren entweder keine weitere organische Komponente enthalten, oder ein wassermischbares Lösungsmittel in einer Konzentration, die jenes Maß nicht erreicht, das zur vollständigen Ausfällung von Natriumdithionit führt. Im Falle von Aceton als Lösungsmittel kann der Anteil beispielsweise bis zu 40 Gew.-% betragen.

Aus der Gruppe der einfach ethylenisch ungesättigten Monomere sind geeignet die ungesättigten Carbonsäuren, wie die Acryl- und die Methyacrylsäure, sowie deren Ester und Amide, wobei es sich bei den Methacrylsäureestern und -amiden um besonders bevorzugte Vertreter handelt. Die verwendbaren Ester sind im einzelnen: Methylmethacrylat, Ethylmethyacrylat, Hydroxyethylmethacrylat, Hydroxypropylmethacrylat, Dihydroxypropylmethacrylat sowie die entsprechenden Acrylate. Unter den Methacrylaten ferner: Glycidylmethacrylat, Trimethylammonium-2-hydroxypropylmethacrylatchlorid, Dimethylaminoethylmethacrylat, Diethylaminoethylmethacrylat, Diethylenglycolmethacrylat, Octaethylenglycolmethacrylat, Sulfopropylmethacrylat, 2-N-Morpholinoethylmethacrylat. Geeignete Monomere auf Amidbasis sind: Acrylamid, Dimethylaminopropylmethacrylamid, Methacrylamidopropyl-trimethylammoniumchlorid, 2-Acrylamido-2-methyl-propansulfonsäure, N-Acrylamidoglycolsulfonsäure, N-Morpholinopropyl-methacrylamid, Methacrylamidoglycolatmethylether, N-Hydroxyethyl-methacrylamid, N-[tris-(hydroxymethyl)]-methyl-methacrylamid. Weitere geeignete, einfach ethylenisch ungesättigte Monomere sind: Vinylacetat, N-Vinylpyrrolidon, 4-Vinylpyridin, N-Vinylimidazol.

Die genannten Monomere sind sowohl alleine als auch im Gemisch anwendbar. Insbesondere ist es möglich, einfach und mehrfach ethylenisch ungesättigte Monomere in Kombination anzuwenden, wodurch die Aufpfropfung eines vernetzten Polymeren erreicht wird. Es können jedoch auch mehrfach ethylenisch ungesättigte Monomere alleine angewandt werden.

Geeignete mehrfach ethylenisch ungesättigte Monomere sind: Pentaerythritdimethacrylat, Glycerindimethacrylat, Tetraethylenglycoldimethacrylat, Tetraethylenglycoldiacrylat, Methylenbisacrylamid.

### Einsatzform der Polymere.

Das erfindungsgemäße Verfahren eignet sich sowohl für den Einsatz zur Pfropfung der Polymere vor ihrer endgültigen Verarbeitung als auch nach ihrer Verarbeitung zu Formkörpern. Im ersteren Fall kann das Polymer beispielsweise als Pulver oder feines Granulat vorliegen.

Bei den für die Anwendung des erfindungsgemäßen Verfahrens eingesetzten Formkörpern kann es sich um kompakte Körper handeln, worunter solche zu verstehen sind, die eine in Relation zur Masse relativ kleine Oberfläche aufweisen. Beispiele dafür sind Platten, Rohre, Schläuche, Gefäße wie Flaschen u. dgl., aber auch Konstruktionsbauteile wie Zahnräder. Weniger kompakte Formkörper, die eine relative große Oberfläche in Relation zur Masse aufweisen sind Folien, Fasern oder Kapillaren. Fasern im Dickenbereich von 1-100 µm haben beispielsweise ein Oberflächen/Massenverhältnis etwa im Bereich von 0.4 bis 4 m²/g. Faserige Formkörper können sowohl in Form von Textilfasern weiterverarbeitet sein zu Geweben, ebenso zu nichtgewebten, flächigen Gebilden wie Vliesen, die beispielsweise für Filtrationszwecke eingesetzt werden können.

Besonders eignet sich das erfindungsgemäße Verfahren für Formkörper, die ein extrem großes Verhältnis der Oberfläche zur Masse des Polymeren aufweisen, wie z.B. für mikroporöse Membranen zur Partikel- und Sterilfiltration, deren Basispolymer häufig aus Polyamiden oder Polysulfonamiden besteht. Das Oberflächen/Massenverhältnis kann bei derartigen porösen Formkörpern im Bereich zwischen 5 und 50 m²/g liegen. Die zwischen den Poren bestehenden Stege weisen daher nur sehr geringe Wandstärken auf, wobei typische Werte in der Größenordnung von einigen Hundertstel bis wenige Zehntel Mikron liegen. Mikroporöse Membranen lassen sich in Ultra- und Mikrofiltrationsmembranen einteilen. Die ersteren sind durch Porengrößen charakterisiert, die sie zur Rückhaltung von Makromolekülen, etwa im Molmassenbereich zwischen 500 und 1 000 000 Dalton befähigen, während die letzteren wirksame Porengrößen im Bereich zwischen etwa 0.01 und 10 µm aufweisen. Mikroporöse Membranen weisen entweder eine durchgehend mikroporöse Struktur auf oder eine midroporöse Basisstruktur und eine an der Oberfläche befindliche, hautartige Schicht, die im technischen Sprachgebrauch als Skin bezeichnet wird. Diese Skin weist infolge des Fehlens von Mikroporen keine konvektive, sondern nur eine diffuse Permeabilität für den Stofftransport auf und ist daher für Stofftrennungen auf molekularer Basis geeignet. Typische technische Trennverfahren, die mit den letztgenannten, eine Skin aufweisenden Membranen durchgeführt werden können, sind die umgekehrte Osmose, die Gastrennung sowie die Pervaporation.

Eine weitere Gruppe von Formkörpern mit hohem Oberflächen-Massenverhältnis sind Schäume sowie mikroporöse, dampfdurchlässige Materialien, wobei ein Einsatzgebiet für die letzteren die Verwendung als Lederersatzstoff ist. In der Technik bevorzugte Polymere für die Herstellung derartiger Formkörper sind die Polyurethane, Schäume können sowohl offen-, als auch geschlossenzellig sein. Im ersten Fall ist nach der Erfindung eine Pfropfung an der gesamten, also auch der inneren Oberfläche des Schaumes vorgesehen, im anderen Fall nur an der äußeren Oberfläche.

### Propfpolymerisation.

Unter Pfropfpolymerisation versteht man eine Polymerisation, bei der auf eine Polymerkette eines einheitlichen Produktes eine Seitenkette aus einem oder mehreren anderen Monomeren aufpolymerisiert wird. Die Eigenschaften des erhaltenen Pfropfcopolymerisats, wie z.B. Löslichkeitsverhalten, Schmelzpunkt, Wasseraufnahme, Benetzbarkeit, mechanische Eigenschaften, Adsorptionsverhalten etc. weichen mehr oder weniger stark von denen des Ausgangspolymeren ab, je nach Art und Menge des oder der aufpolymerisierten Monomeren. Je größer das Mengenverhältnis des aufgepfropften Polymeren im Verhältnis zum Basispolymeren ist, umso stärker überwiegen die Eigenschaften des ersteren.

Darüber hinaus werden die Eigenschaften des Pfropfcopolymerisats von der Stelle beeinflußt, an der die Pfropfung an dem Ausgangspolymeren erfolgt.

Pfropfpolymerisationen können sowohl in flüssiger Phase, also in der Schmelze oder Lösung, als auch in der festen Phase durchgeführt werden, wobei das Basispolymer im allgemeinen in einer gequollenen Form vorliegen muß, um den Zutritt des Monomeren zu den Ketten des Basispolymeren zu ermöglichen. Die Quellung kann entweder durch das Monomer selbst erfolgen, oder durch eine weitere Komponente, die an der Polymerisation selbst nicht beteiligt ist. Die Pfropfung schreitet in diesem Fall von der Oberfläche zum Inneren des Polymeren fort. Dabei kann der Fall eintreten, daß das entstehende Pfropfcopolymer im Pfropfmedium löslich ist, wodurch der Fortgang der Pfropfung beschleunigt wird, weil sich die Diffusionswege während der Pfropfung nicht verlängern.

### Oberflächenpfropfung von Formkörpern.

In besonders zweckmäßiger Weise läßt sich die vorliegende Erfindung auf die Oberflächenpfropfung von Formkörpern anwenden, insbesondere von Geweben, Vliesen und Membranen aus Nylon (vgl. in diesem Zusammenhang die DE-OS 39 29 648.2-44). Jedoch können auch andere Formteile, etwa zur Modifizierung der Benetzung-, Gleit- und Adsorptionseigenschaften nach den erfindungsgemäßen Verfahren Oberflächenmodifiziert werden.

Bei der reinen Oberflächenpfropfung werden nur die unmittelbar an der Oberfläche des Formkörpers befindlichen Teile der Ketten des Basispolymeren gepfropft, so daß in jenen Fällen, in denen das entstehende Pfropfcompolymer bei vollständiger Pfropfung in ein im Pfropfmedium lösliches Pfropfcopolymer übergeführt würde, der ungepfropfte Teil der Polymerkette im Polymerverband verbleibt, so daß kein Ablösen des Pfropfcopolymers von der Oberfläche des Formkörpers möglich ist. Bei der reinen Oberflächenpfropfung sind daher auch solche Monomere verwendbar, die bei vollständiger Pfropfung zu löslichen Produkten führen würden. Im Fall der Matrixpfropfung von Formkörpern, bei der ganze Ketten des Basispolymeren gepfropft werden, ist die Anwendbarkeit der Monomere auf jene beschränkt, bei denen auch des entstehende Pfropfcopolymerisat unlöslich ist. Dies kann gegebenenfalls durch eine vernetzende Pfropfung unter Zugabe eines mehrfach ethylenisch ungesättigten Monomeren erreicht werden, wenn das für einen Anwendungsfall vorgesehene Monomer selbst diese Voraussetzung nicht erfüllt.

Die Matrixpfropfung nichtkompakter Formkörper ist dann erforderlich, wenn Bulk-Eingenschaften, wie z.B. Elastizität oder Flexibilität, die Löslichtkeitseigenschaften oder die Beständigkeit gegen gamma-Strahlen verändert werden sollen. Sollen hingegen nur das Adsorptions- oder/und das Benetzungsverhalten beeinflußt und eine Änderung der mechanischen Eigenschaften sowie der Löslichkeit vermieden werden, ist es hingegen erforderlich, ein Fortschreiten der Pfropfung in die Tiefe des Polymeren, die Matrixpfropfung, zu verhindern.

Bei Matrixpfropfung nichtkompakter Formkörper ist das Ergebnis der Oberflächenpfropfung somit dasselbe, wie das, welches erhalten würde, wenn der betreffende Formkörper von vorneherein aus dem Pfropfcopolymer hergestellt worden wäre. Der Vorteil der nachträglichen Pfropfung besteht demgegenüber darin, daß vielfach für die Basispolymeren entsprechende Herstellungsverfahren bekannt oder möglich sind, während sie für das Pfropfcopolymer entweder nicht bekannt oder prinzipiell nicht durchführbar sind. So sind beispielsweise geeignete Verfahren zur Herstellung von mikroporösen Membranen aus Polyamiden oder Polysulfonamiden sowie zur Herstellung offenporiger Schäume aus Polyurethanen bekannt. Diese Techniken sind jedoch auf die entsprechenden Pfropfcopolymerisate nicht ohne weiteres anzuwenden. Wenn es sich bei den Pfropfcopolymerisaten um in gängigen Lösungsmitteln unlösliche Produkte handelt, sind diese Verfahren sogar prinzipiell nicht übertragbar.

Andererseits gibt es Fälle, in denen eine reine Oberflächenpfropfung, also scharfe Abgrenzung zwischen dem weitgehend unveränderten Basispolymer und dem aufgepfropften Polymer für den vorgesehenen Anwendungsfall der gepfropften Formkörper von entscheidender Bedeutung ist. Derartige Fälle liegen insbesondere dann vor, wenn das Basispolymer als Träger für das in einer dicken Schicht aufgepfropfte Polymer dienen soll und diese aufgepfropfte Schicht weitgehend frei sein soll von Ketten des Basispolymeren.

Ein wichtiges Beispiel für einen derartigen Fall liegt dann vor, wenn durch die Oberflächenpfropfung auf mikroporösen Membranen ein Verbundmaterial für adsorptive Stofftrennungen, wie z.B. den Ionenaustausch oder die Affinitätschromatographie hergestellt werden soll. Dabei kommt es im Interesse einer hohen Adsorptionskapazität, nicht nur darauf an, daß die gesamte innere und äußere Oberfläche von einer Schicht des aufgepfropften Polymeren überzogen ist, sondern auch darauf, daß diese Schicht eine bestimmte Dicke aufweist, weil die gesamte Schichtdicke des aufgepfropften Polymeren einen Beitrag zur Adsorptionskapazität liefert.

Bei derartigen Membranen für die adsorptive Stofftrennung ist es erforderlich, daß die zu adsorbierenden Substanzen, beispielsweise Proteine, in die aufgepfropfte Polymerschicht eindringen können. Obwohl dies nicht streng bewiesen werden kann, wird angenommen, daß hierfür die aufgepfropften Ketten in einem durch das angewandte Medium voll solvatisierbaren Zustand vorliegen müssen und daß zwischendurch vorhandene Ketten des Basispolymeren diesem Ziel abträglich sind.

Obige Deutung stützt sich auf die Beobachtung, daß bei identischen Ausgangsmembranen, gleichem Pfropfgrad und auf identische Weise eingeführten Affinitätsliganden wesentlich niedrigere Bindungskapazitäten für die zu adsorbierenden Substanzen gefunden werden, wenn die Pfropfung über die gesamte Schichtdicke erfolgt ist, als wenn die Pfropfung auf die oberflächennahen Kettensegmente des Basispolymeren beschränkt worden ist.

Eine Unterscheidung zwischen diesen beiden Arten der Oberflächenpfropfung, also zwischen Matrixpfropfung und reiner Oberflächenpfropfung, ist im Falle von mikroporösen Membranen durch den Vergleich der Durchflußcharakteristik und der äußeren Dimensionen vor und nach der Pfropfung möglich, sofern die für die Pfropfung verwendete Membrane unverstärkt, d.h. nicht mit einem Vlies oder Gewebe als Verstärkungsmaterial versehen ist. Erfolgt in diesem Fall eine Matrixpfropfung,so tritt ein isotropes Wachstum der Membranmatrix ein, d.h. es erfolgt, makroskopisch gesehen, sowohl ein Flächen- als auch ein Dickenwachstum.

Da bei einem isotropischen Wachstum der Membranmatrix proportional auch die Poren mitwachsen, sinkt dabei zwar die Anzahl der Poren pro Flächeneinheit, ihre Größe nimmt aber dabei zu, so daß insgesamt eine Erhöhung der hydraulischen Permeabilität zu beobachten ist. Das Gegenteil tritt bei der reinen Oberflächenpfropfung ein, d.h. wenn die Pfropfung auf die oberflächennahen Kettensegmente des Basispolymeren beschränkt ist. Da die Membranmatrix selbst dabei ihre Dimensionen nicht verändert, sondern nur eine zusätzliche Schicht aufgepfropft wird, bleiben auch die äußeren Dimensionen konstant, und die aufgepfropfte Schicht führt zu einer Porenverengung, so daß die hydraulische Permeabilität der Membrane abnimmt.

Obwohl eine Unterscheidung zwischen diesen beiden Grenzformen der Oberflächenpfropfung auch auf polymerchemischem Wege denkbar ist, sind die dafür in Frage kommenden Methoden relativ kompliziert und das obengenannte Unterscheidungskriterium erscheint für die praktischen Belange der Membranmodifizierung ausreichend. Einschränkend ist allerdings festzustellen, daß dabei auch die Art des verwendeten Monomers von Einfluß ist. Handelt es sich dabei um ein Monomer, dessen Homopolymer in dem für die erwähnten Permeabilitätsmessungen verwendeten Medium löslich oder stark quellbar ist, so ist in jedem Fall, also auch bei Matrixpfropfung, eine Abnahme der Permeabiltät zu beobachten. In der Praxis hat sich gezeigt, daß bei der Pfropfung von Hydroxyethylmethacrylat ein in Wasser hinreichend wenig quellbares Pfropfpolymer entsteht, um obige Unterscheidungskriterien mit Wasser als Medium zu Bestimmung der hydraulischen Permeabilität anwendbar zu machen.

Die vorstehenden Ausführungen sind nicht in dem Sinn mißzuverstehen, daß bei den beiden Grenzformen der Oberflächenpfropfung eine Permeabilitätssteigerung oder -verminderung zwangsläufig meßbar sein muß. Es handelt sich dabei lediglich um qualitative Unterscheidungskriterien zwischen den beiden Grenzformen der Oberflächenpfropfung, die nur bei entsprechend hohen Pfropfgraden meßbar und außerdem von der Porengröße der Ausgangsmembranen abhängig sind. So ist die Erniedrigung der hydraulischen Permeabilität bei gleichem Pfropfgrad umso größer, je niedriger die Porengröße der Ausgangsmembrane ist. Als Anhaltspunkt kann angegeben werden, daß die genannten Unterscheidungskriterien bei Membranen der nominellen Porengröße von 0.2 µm bei Pfropfgraden von über 10 Gew.-% meßbar werden.

Sowohl bei der Matrixpfropfung als auch bei der reinen Oberflächenpfropfung kann entweder ein hoher oder niedriger Pfropfgrad anzustreben sein. Da bei niedrigen Pfropfgraden die obigen Unterscheidungskriterien nicht anwendbar sind, hat es sich in diesen Fällen bei der Ausarbeitung der Pfropfbedingungen als zweckmäßig erwiesen, die Rahmenbedingungen zunächst bei hohen Pfropfgraden zu erarbeiten, um die Anwendbarkeit der genannten Unterscheidungskriterien sicherzustellen und den gewünschten Pfropfgrad anschließend unter sonst gleichen Bedingungen bei niedrigeren Monomer-konzentrationen einzustellen. Dabei kann, wenn das für die Pfropfung vorgesehene Monomer zu stark wasserquellbaren Produkten führt, so daß die hydraulische Permeabiltät für Wasser in jedem Fall absinkt, für die Permeabilitätsbestimmung auch ein nichtwäßriges Medium herangezogen werden.

In den Fällen, in denen für die Anwendung des durch Pfropfung herzustellenden Produktes eine relativ dicke Schicht an Pfropfpolymer erforderlich ist, wie zum Beispiel im Falle der Herstellung von Membranen für die adsorptive Stofftrennung, ist hingegen eine Minderung der hydaulischen Permeabilität unvermeidlich, so daß, um ein bestimmtes Mindestmaß an hydraulischer Permeabilität des Endproduktes zu gewährleisten, von einer entsprechend grobporigen Ausgangsmembrane ausgegangen werden muß. Die Relation von Ausgangsporosität, Pfropfgrad, Permeabilität und Bindungskapazität des Endproduktes kann dabei in dem Fachmann geläufiger Weise zur Optimierung variiert werden.

Dabei ist auch zu berücksichtigen, daß mit zunehmender Porengröße die innere Oberfläche einer mikroporösen Membrane zunimmt und zwar besonders stark im Bereich bis zur nominellen Porengroße von 0.2 µm. Wenn man die Proteinadsorption der nichtmodifizierten Membrane als Maß der inneren Oberfläche heranzieht, so beträgt, die innere Oberfläche einer 0.1 µm-Membrane gleich 1 gesetzt, die relative innere Oberfläche bei 0.2 µm nur mehr 0.75. Bei 0.45 µm sinkt sie auf nur mehr 0.65, bei 0.8 µm auf 0.5 und beträgt bei 3.0 µm immer noch 0.43. Da sich die Dicke der aufgepfropften Schicht rechnerisch aus der aufgepfropften Masse geteilt durch die Oberfläche ergibt, ist somit bei identischem Pfropfgrad die Schichtdicke im Fall einer groben Ausgangsmembrane erheblich höher als bei einer feineren Ausgangsmembrane. Im Interesse kurzer Diffusionswege zur Erreichung einer günstigen Adsorptions- und Desorptionskinetik sind jedoch kurze Diffusionswege bei Membranen für adsorptive Stofftrennungen generell zu bevorzugen. Mit anderen Worten, bei der oben skizzierten Optimierungsvorschrift für die Pfropfung von Membranen für adsorptive Stofftrennungen sind neben den Größen Bindungskapazität und hydraulische Permeabilität auch die kinetischen Parameter mit einzubeziehen.

Eine generelle Anweisung für die Herstellung optimaler derartiger Produkte kann deshalb nicht gegeben werden, weil dieses Optimum je nach Anwendungsfall sehr unterschiedlich liegen kann. Soll die Zielsubstanz aus einem sehr großen Volumen einer sehr verdünnten Lösung gewonnen werden, sind hohe hydraulische Permeabilitäten in Verbindung mit einer hohen Adsorptionsgeschwindigkeit erforderlich. In diesem Fall ist es zweckmäßig, eine feinporige Ausgangsmembrane in Verbindung mit einem niedrigen Pfropfgrad zu wählen. Liegt hingegen die Zielsubstanz in relativ hoher Konzentration vor, gewinnt die Bindungskapazität gegenüber den kinetischen Gesichtspunkten an Bedeutung und groberporige Membranen mit hohem Pfropfgrad sind vorzuziehen.

Wenn durch die Oberflächenpfropfung nur eine Beeinflussung des Zeta-Potentials oder der Benetzbarkeit bzw. eine Herabsetzung der unspezifischen Adsorption erreicht werden soll, also nur die Oberfläche des Pfropfpolymeren, nicht aber sein Volumen wirksam wird, ist eine reine Oberflächenpfropfung in Verbindung mit dem für eine vollständige Oberflächenbelegung minimal erforderlichen Pfropfgrad anzustreben.

### Die Reduktionsmittel.

Das bevorzugte Reduktionsmittel für die Anwendung des erfindungsgemäßen Verfahrens ist Natriumdithionit sowie dessen Folgeprodukte, wie z.B. Rongalit. Andere Reduktionsmittel wie Hydrazin oder Ascorbinsäure, letztere im alkalischen Bereich, sind ebenfalls einsetzbar, werden jedoch weniger bevorzugt.

Ein erfindungsgemäß geeignetes Reduktionsmittelsystem ist in der Literatur im Zusammenhang mit redox-initiierten Polymerisationen beschrieben (R.W. Brown C.V. Bawn, E.B. Hansen, L.H. Howland in "Ind. Eng. Chem." 46, 1073-1080 (1954) und besteht aus einer Kombination von EDTA-komplexiertem Fe²⁺ mit Rongalit bei etwa pH=10. Rongalit selbst ist bei Raumtemparatur für das erfindungsgemäße Verfahren weitgehend unwirksam, wohl aber bei Temperaturen ab 40-50 °C, wo es ein ausreichendes Redoxpotential entwickelt. Rongalit, das technisch als Dithionit mit Formaldehyd hergestellt wird, scheint auf ganz ähnliche Weise wirksam zu sein wie Dithionit selbst, wobei der Zusatz der komplexierten Fe-Ionen ebenso wie die Temperaturerhöhung im wesentlichen die Freisetzung des Dithionits zu bewirken scheinen.

Im Gegensatz zu den weiter oben erwähnten Pfropfverfahren auf N-Halogen-Polyamiden nimmt nach dem erfindungsgemäßen Verfahren in einem bestimmten Bereich die Pfropfgeschwindigkeit mit steigendem, also negativerem Redoxpotential ab. So liegt bei der Pfropfung von Hydroxymethylmethacrylat auf Nylonmembranen bei -340 mV der Pfropfgrad bei gleicher Pfropfdauer um mehr als eine Größenordnung über der bei -440 mV, wenn als Reduktionsmittel Natruimdithionit bei einem pH von 8 benutzt wird.

Zur Durchführung des erfindungsgemäßen Verfahrens unter Verwendung von Natrumdithionit als Reduktionsmittel wird ein pH-Bereich von 6-10 bevorzugt, wobei der besonders bevorzugte Bereich zwischen 7.5 und 8.5, namentlich bei 8 liegt. Die Konzentration des Natriumdithionits kann zwischen 0.02 und 1 % liegen. Wenn dabei ein Pfropfbad über einen längeren Zeitraum benutzt wird,kann das Redoxpotential während der Pfropfung potentiometrisch bestimmt und über die Zudosierung eines Natriumdithionitkonzentrates konstant gehalten werden. Typische Werte für ein geeignetes Redoxpotential liegen zwischen -100 und -500 mV, insbesondere zwischen -100 und -300 mV, insbesondere zwischen -200 und -300 mV. Die genauen Bedingungen, unter denen die Reaktionsmittel eingesetzt werden, lassen sich bereichsmäßig nicht festlegen, jedoch durch einfache Optimierungsversuche ermitteln.

### Ursache der erhöhten chemischen Beständigkeit.

In jenen Fällen, in denen sich das Stickstoffatom in der Hauptkette des Basispolymeren befindet, wie bei den Polyamiden und Polyurethanen, tritt bei der Einwirkung von Luftsauerstoff in der Hitze eine oxidative Spaltung der Peptid- bzw. Carbamidsäuregruppe ein, die eine Verminderung der Kettenlänge und somit einen Abbau des Polymeren bewirkt. Diese Reaktion ist begleitet von einem Verlust an mechanischer Festigkeit sowie einer Versprödung. Außerdem kann eine braune Verfärbung auftreten, die bei vielen Anwendungsfällen unerwünscht ist. In gleicher Weise erfolgt ein Kettenabbau auch bei einem hydrolytischen Angriff sowie bei der Einwirkung von elektromagnetischer Strahlung, insbesondere von UV- und gamma-Strahlung.

Durch die Anwendung des erfindungsgemäßen Verfahrens wird überraschenderweise eine Erhöhung der Beständigkeit gegen Kettenabbau erreicht. Da dasselbe Ergebnis durch das in einer Parallelanmeldung (P 39 29 648.2-44) beschriebene Verfahren durch Pfropfung auf N-Halogen-Polymeren erreicht wird, von dem bekannt ist, daß die Pfropfung am Stickstoff erfolgt, wird angenommen, daß dasselbe auch bei dem erfindungsgemäßen Verfahren zutrifft, so daß die Wasserstoffatome am Stickstoff ganz oder teilsweise durch die aufgepfropfte Polymerkette substituiert werden. Die entstehenden N-substituierten Derivate des Basispolymeren stellen somit im Falle der Polyamide und Urethane völlig neue Klassen von Polymeren dar, indem sie nicht mehr die typischen Peptid- bzw. Carbamidsäuregruppe aufweisen, sondern sekundäre Amidgruppen bzw. N-substituierte Carbamidsäuregruppen in der Hauptkette. Infolge des Fehlens eines Wasserstoffatoms am Stickstoff und/oder der durch die Substitution bewirkten sterischen Hinderung und der damit einhergehenden verminderten Reaktionsfähigkeit dieser Gruppen wird die für die Ausgangspolymeren typische Hydrolyse- und Oxidationsanfälligkeit sowie auch die Strahlenempfindlichkeit entscheidend herabgesetzt.

### Oxidationsbeständigkeit.

Die Oxidationsempfindlichkeit der Basispolymeren hat dazu geführt, daß nach dem Stand der Technik eine Stabilisierung durch einen Zusatz von Antioxidantien erfolgt, wenn die daraus hergestellten Formkörper für den Einsatz bei höheren Temperaturen in Gegenwart von Luftsauerstoff vorgesehen sind. Aber auch in solchen Fällen, in denen der Einsatz der Formkörper bei hohen Temperaturen keine Rolle spielt, kann es erforderlich sein, diese bei hohen Temperaturen zu behandeln, beispielsweise zu Reinigungs-oder Sterilisationszwecken.

Die Sterilisation bei hohen Temperaturen spielt eine große Rolle bei Formkörpern, die auf medizinischem Gebiet oder in der pharmazeutischen oder verwandten Industrien eingesetzt werden. Häufig verwendete Sterilisationsverfahren beruhen beispielsweise auf dem Autoklavieren oder auf dem Bedampfen mit Wasserdampf bei bis zu über 140 °C. Während beim Autoklavieren, sachgemäße Bedienung des Autoklaven vorausgesetzt, die Anwesenheit von restlichem Luftsauerstoff im allgemeinen eine geringere Rolle spielt, ist bei der Bedampfung ein Sauerstoffausschluß, besonders in der Anfangsphase, nicht zu gewährleisten.

Die Anwendung von Antioxidantien hat, obwohl es sich um eine wirksame Maßnahme zur Vermeidung des oxidativen Abbaus handelt, schwerwiegende Nachteile. Einerseits ist der Schutz, der dadurch erreicht wird, nur ein vorübergehender, weil das Antioxidans durch Oxidation verbraucht wird oder auf eine andere Weise aus dem Formkörper verschwinden kann. Dies tritt insbesondere bei Extraktion durch flüssige Medien ein, die sich bei der Anwendung des Formkörpers mit diesem in Kontakt befinden. Die Entfernung des Antioxidans aus dem Formkörper kann bei hohen Temperaturen auch über die Gasphase (Verdunstung, Sublimation) erfolgen, weil es sich um durchwegs relativ niedermolekulare Substanzen handelt, die einen gewissen Dampfdruck aufweisen.

Wenn das Antioxidans durch das mit dem Formkörper in Kontakt befindliche Medium extrahiert wird, ist nicht nur eine Verminderung bzw. Verschwinden des Oxidationsschutzes die Folge, sondern auch eine Kontaminierung des Mediums. Zwar kann es sich dabei um Substanzen sehr geringer Wasserlöslichkeit handeln, so daß sich die Existenz des extrahierten Antioxidans im Medium kaum nachweisen läßt. In den für die Anwendung der Formkörper in Frage kommenden Industriezweigen, z.B. der pharmazeutischen oder Nahrungsmittelindustrie, werden jedoch auch häufig nichtwäßrige Medien, wie z.B. solche auf Basis von Alkoholen eingesetzt. Es läßt sich nachweisen, daß auf herkömmliche Weise durch Antioxidantien stabilisierte Formkörper, wie z.B. mikroporöse Membranen, nach Behandlung mit Ethanol keine wirksame Stabilisierung aufweisen, wodurch die Alkoholextrahierbarkeit dieser Antioxidantien unmittelbar nachzuweisen ist.

Die Kontamination der Medien mit Antioxidantien, bei denen es sich meist um vielfältig substituierte Phonolderivate handelt, ist auch dann als in höchstem Grade unerwünscht zu bezeichnen, wenn unmittelbare toxische oder in sonstiger Weise bedenkliche Nebenwirkungen dieser Substanzen nicht bekannt sind.

Es ist bekannt, daß auch Substanzen extrem niedriger Wasserlöslichkeit durch wäßrige Medien aus Polymeren extrahiert werden, wenn diese wäßrigen Medien Komponenten enthalten, die zur Emulgierung oder sonstiger Bindung von lipoidlöslichen Substanzen befähigt sind. Dies ist insbesondere bekannt von Weichmachern, wie sie bei der Verarbeitung von verschiedenen Kunststoffen verwendet werden. Typische wäßrige Medien, die zur Extraktion von lipoidlöslichen Substanzen aus Polymeren befähigt sind, stellen Proteinlösungen dar, wie z.B. Serum, Blutplasma oder Lösungen von Serumproteinen, wie sie bei der Fraktionierung von Blutplasma auftreten. Diese Medien werden vielfach zum Zwecke der Sterilisation durch mikroporöse Membranen aus den genannten Polymeren, insbesondere solchen aus Polyamiden filtriert und können durch darin bedingliche Antioxidantien kontaminiert werden.

In einem weiteren speziellen Fall, bei Textilfasern auf Basis von Polyamiden, kommt die Stabilisierung mit Antioxidantien dashalb nicht in Frage, weil die beim Waschen von Textilien üblichen tensidhaltigen Waschflotten ebenfalls zu einer Extraktion von Antioxidantien führen würden, so daß ihre Wirksamkeit auf die Zeit des Erstgebrauchs beschränkt wäre oder nach jedem Waschvorgang eine Neubehandlung mit Antioxidans erforderlich wäre. Besonders störend macht sich die Oxidationsempfindlichkeit von Textilfasern aus Polyamiden durch ein Vergilben bei hohen Temperaturen bemerkbar.

Im Falle von mikroporösen Membranen wirkt sich der oxidative Abbau in einem rapiden Abfall der mechanischen Festigkeit aus. Werden z.B. nicht oxidationsstabilisierte Nylonmembranen 1 Stunde lang bei 140 °C in Gegenwart von Luftsauerstoff autoklaviert, sinkt die Festigkeit (gemessen als Berstdruck) auf nahezu null. Erfindungsgemäß gepfropfte Membranen hingegen erleiden bei mehr als einstündigem Autoklavieren unter den genannten Bedingungen keinen meßbaren Festigkeitsverlust im Sinne einer Abnahme des Berstdrucks. Zum Unterschied von mit Antioxidantien stabilisierten Membranen bleibt diese Beständigkeit gegen den oxidativen Abbau auch dann erhalten, wenn die Membran vor dem Autoklavieren mit einem üblichen Extraktionsmittel für Antioxidantien wie z.B. Ethanol extrahiert wird.

### Hydrolysebeständigkeit.

Zwar weisen beispielsweise aliphatische und aromatische Polyamide eine relativ hohe Alkalibeständigkeit auf, doch ist die Hydroylsebeständigkeit dieser Polymeren im sauren Bereich als gering zu bezeichnen. Die Hydrolysebeständigkeit der Polyurethane ist sowohl im sauren als auch alkalischen Bereich für viele Anwendungsfälle unzureichend. Polysulfonamide weisen ebenfalls eine niedrige Hydrolysebeständigkeit sowohl im sauren als auch alkalischen Milieu auf. Der hydrolytische Angriff auf die Formkörper kann sowohl bei ihrem bestimmungsgemäßen Einsatz erfolgen, wenn wäßrige Medien hoher oder tiefer pH-Werte und/oder hoher Temperaturen einwirken können, oder aber auch bei der Dampfsterilisation bzw. dem Autoklavieren.

Der hydrolytische Abbau von Formkörpern, die auf medizinischem oder pharmazeutischem Gebiet sowie verwandten Gebieten eingesetzt werden, ist nicht nur wegen der bereits erwähnten Herabsetzung der mechanischen Festigkeit schädlich. Auch hier besteht ein Kontaminationsrisiko, indem Hydrolyseprodukte der Polymeren, wie z.B. Hexamethylendiamin und Adipinsäure im Falle von Nylon 6,6 ebenso wie auch Oligomere in das Medium gelangen können.

Die Erhöhung der Hydrolysebeständigkeit durch Anwendung des erfindungsgemäßen Verfahrens ist insbesondere deshalb besonders bedeutungsvoll, weil andere Methoden zum Schutz der Basispolymeren gegen hydrolytischen Abbau, entsprechend den Antioxidantien gegen den oxidativen Abbau, technisch nicht zur Verfügung stehen. Da die Hydrolyse von Formkörpern, ebenso wie die Oxidation, an der Oberfläche angreift, kann durch Pfropfung an der Oberfläche ein sehr weitgehender Schutz erreicht werden.

### Strahlenbeständigkeit.

Das Gleiche gilt auch für den Schutz gegen den Angriff ultravioletter Strahlung. Ähnlich wie bei den Antioxidantien erübrigt sich durch die Anwendung des erfindungsgemäßen Verfahrens der Einsatz von UV-Stabilisatoren.

Die Beständigkeit gegen gamma-Strahlung ist deshalb von erheblicher technischer Bedeutung, weil die Strahlensterilisation für im medizinischen oder pharmazeutischen Bereich verwendete Formkörper weit verbreitet ist. Es ist bekannt, daß beispielsweise mikroporöse Membranen aus Polyamiden bei der Strahlensterilisation vollständig zerstört werden. Die Erhöhung der Beständigkeit wenig kompakter Formkörper mit hohem Oberflächen/Massenverhältnis gegen gamma-Strahlung wird erfindungsgemäß durch eine weitgehende Matrixpfropfung gelöst. Im Falle der Beständigkeit gegen gamma-Strahlung ist es also auf Grund der größeren Eindringtiefe dieser Strahlung erforderlich, einen größeren Anteil des Basispolymeren zu pfropfen, als dies für die Erhöhung der chemischen und der UV-Beständigkeit erforderlich ist.

### Mechanische Eigenschaften.

Eine nennenswerte Änderung der mechanischen Eigenschaften von Formkörpern nach dem erfindungsgemäßen Verfahren ist naturgemäß auf jene Gruppe beschränkt, die ein hohes Oberflächen/Massenverhältnis aufweisen, weil sich anderenfalls eine Änderung der mechanischen Oberflächeneigenschaften gegenüber den Bulk-Eigenschaften nicht auswirkt.

Basispolymere wie Polyamide und Polyurethane werden technisch vorwiegend wegen ihrer besonderen mechanischen Eigenschaften eingesetzt, wobei im ersteren Fall die mechanische Festigkeit, im anderen Fall die Elastizität besonders herausragend sind. Eine grundsätzliche Änderung der chemischen Natur dieser Polymeren, wie sie die Substitution des Wasserstoffatoms am Stickstoff darstellt, hat eine grundsätzliche Änderung der zwischenmolekularen Kräfte zur Folge, indem die Ausbildung von Wasserstoffbrücken zwischen den Polymerketten verhindert wird, wovon in der Regel keine Verbesserung der mechanischen Eigenschaften zu erwarten ist.

Erfindungsgemäß ist es überraschenderweise dennoch möglich, bei gezielter Auswahl der zur Pfropfung verwendeten Monomeren eine erhebliche Verbesserung von mechanischen Eigenschaften zu bewirken. So kann durch Pfropfung von Hydroxyethylacrylat auf mikroporösen Membranen aus Nylon 6,6 und Nylon 6 die Tendenz dieser Materialien zur Sprödigkeit im vollkommen trockenen Zustand, also beispielsweise nach Trocknung bei 105 °C im Trockenschrank, behoben werden und ein vollständig flexibles Material unbeeinträchtigter mechanischer Festigkeit erhalten werden. Wird hingegen anstelle von Hydroxyethylacrylat Hydroxyethylmethacrylat verwendet, ist bei gleichem Pfropfgrad im Gegenteil eher eine Versprödung zu beobachten.

### Benetzbarkeit, Adsorptionseigenschaften und Zeta-Potential.

Die Art der erreichbaren Oberflächenmodifizierung wird naheliegenderweise in erster Linie durch die Art des eingesetzten Monomeren bestimmt, wobei gegebenenfalls auch Monomergemische eingesetzt werden können, wenn, wie bei der Beschreibung der technischen Ausführung des Verfahrens ausgeführt wird, spezielle Maßnahmen getroffen werden, die die Reproduzierbarkeit der Monomerzusammensetzung über den gesamten Produktionsprozeß gewährleisten.

Gemäß einer bevorzugten Ausführungsform der Erfindung werden die aufgepfropften Monomere vernetzt, vorzugsweise unter Einsatz bifunktioneller Monomerer, wobei in zweckmäßiger Weise die Vernetzung gleichzeitig mit der Aufpfropfung durchgeführt wird. Als derartige bifunktionelle Monomere seien ungesättigte Diester von Polyalkoholen erwähnt (siehe Monomere).

Es kann jedoch, je nach dem beabsichtigten Verwendungszweck auch zweckmäßig sein, das aufgepfropfte Polymer unvernetzt zu lassen, wobei in diesem Fall dafür Sorge zu tragen ist, daß in den aufzupfropfenden ethylenisch ungesättigten Monomeren keine bifunktionellen Monomere als Verunreinigungen enthalten sind.

Bezüglich der Monomerkonzentration, Pfropfdauer und Pfropftemperatur ist anzumerken, daß dann, wenn eine hohe Kettendichte bei geringer Kettenlänge erforderlich ist, beispielsweise im Hinblick auf die Beeinflussung von Benetzungseigenschaften, Adsorptionseigenschaften und Zeta-Potential, nur niedrige Monomerkonzentrationen und lange Pfropfzeiten anzuwenden sind, wobei möglichst niedrige Pfropfgrade und dementsprechend eine möglichst niedrige Durchflußminderung anzustreben sind. Geht es um die Pfropfung eines Ausgangspolymeren für die nachträglich Fixierung von Liganden (beispielsweise natürliche und synthetische Liganden für die Affinitätschromatographie) sind größere Kettenlängen mit höheren Pfropfgraden anzustreben, aber nicht unbedingt eine hohe Kettendichte. In diesem Falle wird man eine höhere Monomerkonzentration wählen und mit kürzeren Pfropfzeiten auskommen.

Von den in der Auflistung angegebenen, für das erfindungsgemäße Pfropfverfahren geeigneten Monomeren, unter denen die Methacrylsäurederivate gegenüber sonst vergleichbaren Acrylsäurederivaten wegen ihrer wesentlich höheren Hydrolysestabilität generell bevorzugt werden, eignen sich die Acrylate und Methacrylate von Polyalkoholen, wie z.B. des Ethylenglycols, des Glycerins, des Diethylenglycols, des Octaethylenglycols und des Propylenglycols sowohl für die Hydrophilisierung, d.h. die Erhöhung der Benetzbarkeit durch Wasser, als auch die Verminderung der Proteinadsorption. Darüber hinaus sind die genannten Monomere geeignet zur Herstellung von Verbundmaterialien, die für die nachträgliche Fixierung von Affinitätsliganden durch Umsetzungen an den Hydroxylgruppen vorgesehen sind. Ein derartiges Produkt wird in einer Parallelanmeldung beschrieben (P 39 29 648.2-44). Besonders bevorzugt werden für diesen Anwendungsfall Hydroxyethylmethacrylat und Glycerinmethacrylat.

Die Pfropfung von Glycidylmethacrylat wird bevorzugt zur Herstellung von Basismaterialien für vielfältige weitere Umsetzungen, die ebenfalls in einer Parallelanmeldung beschrieben sind (Ionenaustauscher, Chelataustauscher etc). Darüber hinaus kann die Pfropfung von Glycidylmethacrylat auch direkt mit dem Ziel erfolgen, eine reaktive Oberfläche zur chemischen Bindung verschiedener Substanzen, die mit Epoxidgruppen reagieren können, zu schaffen wie z.B. Proteine. Es wird somit durch die Pfropfung von Glycidylmethacrylat eine sehr bequeme Epoxidaktivierung erreicht (die Epoxidaktivierung von Adsorberoberflächen, beispielsweise durch Umsetzungen mit Epichlorhydrin, ist eine in der Affinitätschromatographie weitverbreitete Technik). Fur den gleichen Zweck kann auch die Pfropfung von Methylacrylamidoglycolatmethylether erfolgen, der ebenfalls eine hohe Reaktivität mit Aminogruppen aufweist und eine hohe Pfropftendenz besitzt.

Für die Herstellung von Ionenaustauschern, vorzugsweise Membranionenaustauschern kommt neben der Pfropfung von Glycidylmethacrylat und der nachfolgenden Einführung der ionischen Gruppen auch die direkte Pfropfung der ionischen Monomeren in Frage, wobei allerdings der erstgenannte Weg mehr bevorzugt wird als der letztere. Die in der Liste der Monomeren genannten stark sauren, schwach sauren, stark basischen und schwach basischen Monomere sind für diese Ausführungsformen der Erfindung geeignet. Wenn anstelle eines für Ionenaustauscher erforderlichen hohen Pfropfgrades die bereits erwähnten Maßnahmen zur Erzielung eines niedrigen Pfropfgrades bei einer hohen Kettendichte angewandt werden, können die erwähnten Produkte mit modifiziertem Zeta-Potential erhalten werden, wobei die Forderung nach niedrigem Pfropfgrad in erster Linie im Falle von mikroporösen Membranen von Bedeutung ist, um eine unnötige Durchflußminderung zu vermeiden.

### Pfropfgrad.

Unter Pfropfgrad wird die Massenzunahme des Polymeren bei Anwendung des erfindungsgemäßen Pfropfverfahrens bezogen auf die Ausgangsmasse des Formkörpers, ausgedrückt in Gew.-%, verstanden. Es versteht sich von selbst, daß es sich dabei nur bei der Pfropfung von Pulvern, Granulaten oder nicht kompakten Formkörpern um eine relevante Größe handeln kann, weil bei kompakten Formkörpern im allgemeinen nur die Oberfläche gepfropft werden kann.

Bei den nicht kompakten Formkörpern hingegen, unter denen die mikroporösen Membranen einen extremen Grenzfall darstellen, kann der Pfropfgrad nach dem erfindungsgemäßen Verfahren in sehr weiten Grenzen schwanken. Zum Unterschied von dem in der Paralellanmeldung DE 3 929 648 beschriebenen Pfropfverfahren ist keine obere Grenze für den erreichbaren Pfropfgrad festzustellen. Dies erklärt sich daraus, daß nicht, wie bei dem genannten Verfahren eine Vorchlorierung durchgeführt werden muß, die sich bei der Pfropfung erschöpft. So können beispielsweise bei der Pfropfung von Hydroxyethylmethacrylat auf Nylon 6,6-Membranen innerhalb von 24 Stunden Pfropfgrade von 20 000 % erreicht werden. Es können also Produkte erhalten werden, die nur mehr zu 0.5 % aus dem Ausgangspolymer bestehen. Im Falle von Formkörpern bleibt dabei deren Form erhalten und nur die Dimensionen werden verändert.

Die in der Praxis angestrebten Pfropfgrade richten sich nach dem gewünschten Effekt. Je nachdem ob nur reine Oberflächeneigenschaften, die adsorptive Bindungskapazität oder die Bulk-Eigenschaften beeinflußt werden sollen, liegen in der angegebenen Reihenfolge, die Bereiche der in Frage kommenden Pfropfgrade bei etwa 1-5 %, 5-45 % und 10-700 %, wobei diese Bereiche nur als ganz grobe Anhaltspunkte zu verstehen sind.

### Tempern.

Aus physikalisch derzeit nicht vollständig geklärten Gründen ist das Pfropfverhalten der Basispolymeren nicht nur von deren chemischer Struktur, sondern auch von ihrer physikalischen Vorgeschichte abhängig. Dies sei am Beispiel der Polyamide wie folgt erläutert.

Polyamide beispielsweise scheinen in unterschiedlichen Modifikationen aufzutreten, die sich in auffälliger Weise durch ihre Oberflächeneigenschaften, insbesondere das Benetzungsverhalten, unterscheiden. Werden sie aus der Schmelze verarbeitet, wie dies überwiegend der Fall ist, weisen sie einen hohen, wenn auch im Vergleich zu den meisten übrigen Polymeren immer noch niedrigen Kontaktwinkel mit Wasser auf. Werden sie hingegen bei niedrigen Temperaturen aus Lösungen ausgefällt, wie dies beispielsweise bei der Membranherstellung nach dem als "Phaseninversionsprozeß" bekannten Verfahren der Fall ist, ist der Kontaktwinkel mit Wasser so niedrig, daß im Falle der Mikroporosität spontane Benetzung erfolgt. Derartige spontan benetzbare Produkte werden durch einen Tempervorgang nahe dem Kristallitschmelzpunkt in denselben Zustand überführt, der auch bei der direkten Verarbeitung aus der Schmelze vorliegt, d.h. sie sind dann ebensowenig benetzbar, wie aus der Schmelze hergestellte Produkte.

Im Zusammenhang mit dem erfindungsgemäßen Verfahren verdient dieses Phänomen insofern Erwähnung, als die durch Ausfällung aus Lösungen bei niedrigen Temperaturen hergestellten Formkörper aus Polyamid 6 und Polyamid 6,6, was beispielsweise für mikroporöse Membranen aus diesen Polymeren zur trifft, eine geringere und schlecht reproduzierbare Pfropftendenz aufweisen. Erst nach einem Temperschritt, der beispielsweise in überhitztem Wasserdampf bei Temperaturen zwischen 220 und 240 °C ausgeführt wird, kann ein ähnlich günstiges Pfropfverhalten, sowohl das Pfropfvermögen als auch die Reproduzierbarkeit betreffend, erhalten werden, wie bei direkt aus der Schmelze erhaltenen Produkten. Der genannte Temperschritt ist daher ein bevorzugter, wenn auch nicht obligater Teilschritt bei der Anwendung des erfindungsgemäßen Verfahrens auf nach dem Phaseninversionsverfahren bei niedrigen Temperaturen hergestellten mikroporösen Membranen aus Polyamiden.

### Technische Durchführung des Verfahrens.

Die Pfropfung von Pulvern und Granulaten bedarf keiner besonderen Erläuterung, da sie sich für den Fachmann aus den nachfolgenden Ausführungen im Zusammenhang mit Formkörpern ergeben. Derartige Pfropfungen können beispielsweise in Rührbehältern im Chargenbetrieb durchgeführt werden.

Die technische Durchführung des erfindungsgemäßen Verfahrens wird im folgenden für den Fall flächiger Bahnmaterialien, insbesondere mikroporöse Membranen, Vliese oder Gewebe, näher erläutert. Die sich daraus für die kompakteren Formkörper ergebenden Schlußfolgerungen sind für den Fachmann unschwer abzuleiten.

Die Pfropfung kann sowohl im Chargenbetrieb als auch kontinuierlich erfolgen. Zur Erzielung reproduzierbarer Ergebnisse über die gesamte Bahnlänge ist es dabei wesentlich, identische Bedingungen einzuhalten, wobei an die Konstanz dieser Bedingungen über die Zeit unterschiedliche Anforderungen beim Chargen- und beim kontinuierlichen Prozeß bestehen.

Für den Chargenbetrieb bietet es sich an, ein in der Textilindustrie unter der Bezeichnung "Jigger" bekanntes Gerät oder eine ähnliche Vorrichtung zu benutzen. Ein Jigger besteht aus zwei Aufwickelspulen und einem dazwischen liegenden Bad. Das Bahnmaterial wird wechselweise auf den beiden Spulen aufgewickelt und dabei durch das Bad gezogen. Die gesamte Vorrichtung kann durch eine Abdeckhaube hermetisch abgeschlossen werden.

Da die Wickelgeschwindigkeit sehr hoch gewählt werden kann, sind für den Anfang und das Ende der Bahn auch dann identische Bedingungen gegeben, wenn sich das Bad im Verlauf der Behandlung in seiner Zusammensetzung verändert. Obwohl eine derartige Veränderung nicht anzustreben ist, ist sie doch eher tolerierbar, als wenn ein kontinuierliches Verfahren angewandt wird.

Dies ist insbesondere dann von Bedeutung, wenn ein Gemisch von Monomeren gepfropft wird. Infolge der unterschiedlichen Copolymerisationsparameter der einzelnen Monomeren ändert sich die Pfropfflotte nicht nur in der Absolutkonzentration an Monomeren, sondern auch deren Verhältnis zueinander. Bei der diskontinuierlichen Pfropfung ändern sich daher zwar die Pfropfbedingungen mit der Zeit, doch in annähernd gleicher Weise über die gesamte Bahn, so daß die Reproduzierbarkeit gewährleistet ist.

Bei der Pfropfung am Jigger, die unter Hin- und Herspulen der Bahn durch das Pfropfbad erfolgt, wird das Redoxpotential durch Zudosieren des Reduktionsmittelkonzentrates, wobei es sich vorzugsweise um eine 2 %ige Lösung von Na-Dithionit handelt, konstant gehalten. Ebenso wird der pH-Wert durch Laugendosierung konstant gehalten, sofern nicht vorgezogen wird, eine entsprechend starke Pufferung der Flotte vorzunehmen, die dies erübrigen würde. Das Vorhandensein des Tetrachlorkohlenstoffs in Lösung wird dabei am einfachsten dadurch gewährleistet, daß sich am Boden der Wanne eine Überschuß an Tetrachlorkohlenstoff befindet, so daß in der Pfropfflotte annähernd die Sättigungskonzentration aufrechterhalten wird. Nach der in Vorversuchen für die Erzielung des gewünschten Effektes ermittelten Pfropfdauer wird die verbleibende Pfropfflotte aus dem Jigger entfernt, eine Wässerung unter reichlicher Frischwasserzufuhr vorgenommen. Die Bahn kann anschließend auf bekannte Weise getrocknet werden oder unmittelbar weiterverarbeitet werden.

Als kontinuierliches Verfahren kommt sowohl das Bad-verfahren als auch das Imprägnierverfahren in Frage. Beim Badverfahren wird die Bahn für die erforderliche Pfropfdauer einmalig durch das Pfropfbad geführt, beim Imprägnierverfahren wird sie mit der Imprägnierlösung beaufschlagt und hinterher für die erforderliche Pfropfdauer durch eine Verweilstrecke geführt, die einen Inertgasraum darstellt. In beiden Fällen folgt ein Wässerungsbad.

Die Gleichmäßigkeit über die Bahnlänge bereitet im ersteren Fall gewisse Schwierigkeiten, weil die Reproduzierbarkeit nur dann gegeben ist, wenn die Pfropfbedingungen und damit die Zusammensetzung des Pfropfbades über den gesamten Zeitraum der Pfropfung konstant gehalten werden müssen. Schwierigkeiten bereitet dabei insbesondere die Konstanthaltung der Monomerkonzentration, während Redoxpotential und pH-Wert, wie bereits ausgeführt, konstant gehalten werden können. Ebenso kann auch die Sättigung mit Tetrachlorkohlenstoff auf einfache Weise aufrechterhalten werden. Für die Zufuhr des Tetrachlorkohlenstoffs kommt auch eine der weiter unten skizzierten Methoden in Frage (Imprägnierung mit Tetrachlorkohlenstoff und Trocknung bzw. Beladung über die Gasphase, beides vor Eintritt der Materialbahn in das Pfropfbad). Die Konzentration ethylenisch ungesättigter Monomeren kann zwar über die UV-Absorption mit hinreichender Genauigkeit ermittelt werden, doch scheidet diese Methode in Gegenwart von Na-Dithionit und Tetrachlorkohlenstoff aus, weil beide im gleichen Wellenlängenbereich stark absorbieren. Die Dichtemessung ist ebenfalls unzuverlässig, weil sich die Dichte des Pfropfbades schon durch die erforderliche Nachdosierung von Elektrolyten, wie Dithionit und Lauge, ändert.

Dennoch ist das Badverfahren in bestimmten Fällen ohne weiteres anwendbar, nämlich dann, wenn das Monomer eine beschränkte Wasserlöslichkeit aufweist. In diesem Fall ist es zumindest im Bereich der Sättigungskonzentration möglich, ein konstante Monomerkonzentration auch über lange Pfropfzeiten aufrechtzuerhalten. Bei wassermischbaren Monomeren, wie z.B. Hydroxyethylmethacrylat, ist diese Verfahrensvariante ebenfalls anwendbar, wenn durch einen hohen Zusatz von Neutralsalz, beispielsweise Natriumsulfat, die Monomerlöslichkeit herabgesetzt wird, so daß im Sättigungsbereich mit konstanter Konzentration gepfropft werden kann.

Einige für das erfindungsgemäße Verfahren besonders bevorzugte Monomere, wie z.B. Glycidylmethacrylat, Vinylacetat und Methylmethacrylat, weisen eine Wasserlöslichkeit auf, die im für die Anwendung des Verfahrens geeigneten Bereich liegt. So beträgt die Wasserlöslichkeit des Vinylacetats etwa 1.5 %, die des Glycidylmethacrylats etwa 2.5 %. In diesen Fällen ist es auf relativ bequeme Weise möglich, das Pfropfbad laufend auf der der Sättigung entspechenden, konstanten Konzentration zu halten, beispielsweise dadurch, daß es in einem Umwälzkreislauf durch eine Absorptionskolonne mit dem Monomer gesättigt wird. Eine andere, noch einfachere Methode besteht darin, daß eine Emulsion des Monomeren unter Verwendung eines geeigneten Emulgators eingesetzt wird. Das Monomer stellt in einer derartigen Emulsion die disperse Phase dar, während die kontinuierliche, wäßrige Phase das Pfropfmedium bildet. Bei einem derartigen Verfahren ist aus einem Abnehmen des milchigen Aussehens schon visuell leicht erkennbar, ob das Pfropfmedium an Monomer verarmt ist, so daß eine Nachdosierung der Emulsion rechtzeitig erfolgen kann. In jedem Fall ist sichergestellt, daß die Monomerkonzentration im Pfropfmedium nicht unbemerkt unter die Sättigung absinkt.

Eine besonders bevorzugte Ausführungsform der Erfingung ist die Imprägnierpfropfung, bei der die Materialbahn mit der Pfropfflotte, die das Monomer oder Monomergemisch entweder gelöst oder emulgiert enthält imprägniert wird und anschließend durch eine Verweilstrecke in Inertgas geführt wird. Dabei ist zu berücksichtigen, daß weder Monomerkonzentration, Redoxpotential noch pH-Wert über die Zeit konstant gehalten werden können. Umgekehrt aber kann der zeitliche Verlauf dieser Größen über die gesamte Bahnlänge mit hoher Reproduzierbarkeit konstant gehalten und somit ein Höchstmaß an Konstanz der Produkteigenschaften gewährleistet werden, selbst dann, wenn mehr als ein Monomer zum Einsatz kommt.

Die Zufuhr des für die Pfropfung erforderlichen Tetrachlorkohlenstoffs kann bei der Imprägnierpfropfung entweder durch Zugabe zur Pfropfflotte erfolgen, was jedoch weniger bevorzugt wird, weil dabei die Gefahr der Homopolymerisation besteht. Die Materialbahn kann jedoch auch vor der Imprägnierung mit der Pfropfflotte mit Tetrachlorkohlenstoff beladen werden, beispielsweise durch Benetzung entweder mit reinem Tetrachlorkohlenstoff oder im Gemisch mit einem anderen flüchtigen Lösungsmittel, wie beispielsweise Aceton und anschließender Trocknung. Dieses Verfahren wird jedoch wegen der Toxizität von Tetrachlorkohlenstoff und der deshalb erforderlichen Sicherheitsmaßnahmen bei der Verdunstung weniger bevorzugt.

Überraschenderweise wurde festgestellt, daß eine Materialbahn, die beispielsweise aus einem Polyamid besteht, in der Lage ist, ausreichende Mengen an Tetrachlorkohlenstoff aus der Gasphase aufzunehmen. Dies kann entweder vor oder nach der Imprägnierung mit der Pfropfflotte erfolgen. Erfolgt die Beladung mit Tetrachlorkohlenstoff vor der Imprägnierung mit der Pfropfflotte, wird die Materialbahn zunächst durch einen Gasraum geführt, der vorzugsweise aus Stickstoff mit einem bestimmten Partialdruck von Tetrachlorkohlenstoff besteht. Der Partialdruck des Lösungsmittels wird durch am Boden des Gasraumes befindlichen flüssigen Tetrachlorkohlenstoff, der auf einer bestimmten Temperatur zwischen 0 °C und dem Siedepunkt, vorzugsweise zwischen Raumtemperatur und 50 °C, gehalten wird. Die Verweilzeit der Bahn in diesem Gasraum beträgt zwischen 10 sec und 10 min, vorzugsweise zwischen 1 und 2 min. Die Strecke zwischen dem Gasraum und der Imprägnierungsvorrichtung wird so kurz wie möglich gehalten, wobei der Zeitraum zwischen der Beaufschlagung mit Tetrachlorkohlenstoff und der Imprägnierung vorzugsweise unter 5 sec liegt.

Erfolgt die Beladung mit Tetrachlorkohlenstoff nach der Imprägnierung mit der Pfropfflotte, wird in der Inertgasstrecke nach der Imprägnierung auf die bereits beschriebene Weise ein bestimmter Tetrachlorkohlenstoffpartialdruck aufrechterhalten, wobei vorzugsweise eine Sättigung bei Raumtemperatur erfolgt.

Unter diesen beiden Verfahrensvarianten wird im allgemeinen die erstgenannte also die Sorption von Tetrachlorkohlenstoff aus der Gasphase vor der Imprägnierung mit der Pfropfflotte bevorzugt. Die letztgenannte hingegen ist dann vorzuziehen, wenn extrem lange Pfropfzeiten von über 20 min zur Erzielung extrem hoher Pfropfgrade angewandt werden sollen.

Die folgenden Beispiele erläutern die Erfindung.

### Beispiel 1

Die Pfropfung erfolgte auf unverstärkten, mikroporösen Membranen aus Nylon 6,6 der nominellen Porengröße von 0.2 µm aus einer 10 %igen Lösung von Hydroxyethylmethacrylat in 0.1 M Phosphatpuffer (pH=8) in Gegenwart von 1 % Tetrachlorkohlenstoff, wobei die Hauptmenge des Tetrachlorkohlenstoffs ungelöst am Boden des gerührten Reaktionsgefäßes lag, bei Raumtemperatur. In je einer Versuchsreihe wurde das Redoxpotential durch kontinuierliche Zudosierung von Natrium-Dithionitlösung auf -340 bzw. -440 mV konstant gehalten. Die Pfropfdauer wurde variiert.

### Beispiel 2 (Vergleichbeispiel).

Es wurden drei Versuch wie in Beispiel 1 beschrieben bei einem Redoxpotential von -3490 mV über einen Zeitraum von 30 min durchgeführt. Jedoch in einem Fall ohne Zugabe von Tetrachlorkohlenstoff, im zweiten Fall mit Chloroform und im dritten Versuch mit Methylenchlorid anstelle von Tetrachlorkohlenstoff. In keinem Fall war gravimetrisch eine Pfropfung festzustellen (gegenüber einem Pfropfgrad von annähernd 300 % in Gegenwart von Tetrachlorkohlenstoff).

Der Versuch zeigt, daß Tetrachlorkohlenstoff eine obligate Komponente des Verfahrens darstellt (mit weniger reinem Chloroform war in einem früheren Versuch ein geringes Ausmaß an Pfropfung festgestellt worden, das jedoch offensichtlich auf in Spuren vorhandene Verunreinigungen durch Tetrachlorkohlenstoff zurückzuführen war).

### Beispiel 3 (Vergleichsbeispiel).

Es wurde ein Versuch wie in Beispiel 1 beschrieben über einen Zeitraum von 30 min durchgeführt, wobei jedoch kein Na-Dithionit zugesetzt, sondern lediglich unter Sauerstoffauschluß gearbeitet wurde (Abkochen des Puffers, zweistündiges Durchleiten von Reinstickstoff durch die Monomerlösung vor der Pfropfung, Stickstoffatmosphäre über dem Pfropfbad). Es wurde keinerlei Pfropfung festgestellt.

Der Versuch zeigt, daß Na-Dithionit eine obligate Komponente des Verfahrens darstellt, wobei, wie bereits ausgeführt, auch andere Reduktionsmittel in Frage kommen.

### Beispiel 4.

Es wurden im Labormaßstab verschiedene Monomere in einem Pfropfbad, bestehend aus 0.1 % Na-Dithionit in 0.15 M Phosphatpuffer pH=8, 10 % Monomer (sofern nichts anderes angegeben), pH auf 8 nach Bedarf nachgestellt, auf Nylon 6,6-Membranen der nomimellen Porengröße von 0,2 µm gepfropft, wobei 1 % Tetrachlorkohlenstoff als Bodenkörper vorlag.

| Monomer | Pfropfgrad (%) nach 10 min | Pfropfgrad (%) nach 30 min |
|---|---|---|
| Diethylenglycolmethacrylat | 129.0 | 460.0 |
| Hydroxypropylmethacrylat | 90.0 | 404.0 |
| Hydroxyethylmethacrylat | 104.0 | 365.0 |
| Methacrylamidoglycolatmethylether | 72.0 | 185.0 |
| Hydroxyethylacrylat | 52.5 | 122.0 |
| Hydroxypropylacrylat | 85.0 | 102.0 |
| Glycidylmethacrylat (ges. Lösung) | 28.5 | 74.0 |
| Morpholinoethylmethacrylat | 49.3 | 65.0 |
| Glycerinmethacrylat | 37.3 | 60.7 |
| Acrylamid | 26.2 | 57.5 |
| Vinylacetat (ges. Lösung) | 15.0 | 44.0 |
| Octaethylenglycol methacrylat | 10.8 | 35.0 |
| Sulfopropylmethacrylat | 1.1 | 13.1 |
| Tris-(hydroxymethyl)-methacrylamid | 9.5 | 22.3 |
| Trimethylammonium-2-hydroxypropyl-methyacrylatchlorid | 6.9 | 17.8 |
| N-Morpholinopropyl-methacrylamid | 6.6 | 7.7 |
| Acrylsäure | 2.6 | 5.9 |
| Dimethylaminoethylmethacrylat | 0.9 | 5.9 |
| Vinylpyrrolidon | 3.6 | 5.6 |
| Methacrylamid | 2.8 | 3.9 |
| 2-Acrylamido-2-methyl-propansulfonsäure | 1.1 | 3.7 |
| Vinylimidazol | 1.7 | 2.1 |

### Beispiel 5

Jigger-Pfropfung von Hydroxyethylmethacrylat auf Nylon 6,6-Membrane (die Funktionweise eines Jiggers ist im Text erklärt).

Eine 50 m lange Membranbahn (nomineller Porendurchmesser von 0.45 µm) wurde in den trockenen Jigger eingebracht, der Jigger verschlossen und der Gasraum 60 min intensiv mit Stickstoff gespült, während die Membranbahn im Gasraum hin und hergezogen wurde.

Pfropfbad: 5 % Hydroxyethylmethacrylat in 0.1 M Na-Phosphatpuffer pH=8 wurden durch Rühren mit 1 % Tetrachlorkohlenstoff gesättigt und unmittelbar vor dem Einsatz mit 0.1 % Natriumdithionit versetzt.

Das Pfropfbad wurde in den Jigger eingefüllt und dieser in Betrieb gesetzt, d.h. die Membranbahn wurde im geschlossenen Jigger zwischen den beiden Wickelrollen hin und hergezogen ( Bahngeschwindigkeit 8 m/min). Das Pfropfbad wurde während der Pfropfung über einen externen, geschlossenen Kreislauf mit Meß- und Regelkreisläufen für pH und Redoxpotential geführt, wobei der pH-Wert durch Zudosierung von 10 %iger Natronlauge und das Redoxpotential durch Dosierung von 5 %igem Natriumdithionit auf den Sollwerten von 8 bzw. -340 mV gehalten wurden.

Nach einer Pfropfdauer von 30 min wurde das Pfropfbad abgelassen und die Membranbahn im weiter laufenden Jigger mit RO-Wasser gespült. Anschließend wurde die Bahn auf herkömmliche Weise auf einem Walzentrockner bei 80 °C getrocknet.

Der Pfropfgrad der Bahn wurde durch Bestimmung des Flächengewichtes zu 32 ± 2 % ermittelt. Auf diese Weise hergestellte gepfropfte Membranen sind als Ausgangsmaterial für die Herstellung von Affinitätsmembranen geeignet, indem auf bekannte Weise bestimmte Liganden, wie z.B. Reaktionsfarbstoffe an den Hydroxylgruppen des Pfropfpolymeren gebunden werden.

### Beispiel 6

Untersuchung der Oxidationsbeständigkeit.

Verschiedene Membranproben der nominellen Porengröße 0,2 µm wurden im Gasraum eines Autoklaven der Bauform, wie er üblicherweise für die Sterilisation eingesetzt wird, deponiert. Der Autoklave wurde auf 142 °C erhitzt, wobei jedoch nicht, wie sonst üblich, die Luft durch Abblasen von Dampf entfernt wurde. Dadurch wurde die gleichzeitige Einwirkung von Wasserdampf und Luftsauerstoff bei 142 °C sichergestellt. Nach 1 h wurden die Membranen entnommen und der Berstdruck geprüft. Die Berstdruckmessung erfolgte in der Weise, daß die benetzten Filter ohne Unterstützung auf einen Durchmesser von 25 mm mit einem steigenden Gasdruck beaufschlagt wurden und der Druck, bei dem das Bersten der Membranen eintrat, bestimmt wurde. Sämtliche Membranproben waren unverstärkt. Wenn ein Berstdruck meßbar war, wurde die Behandlung mehrfach wiederholt. Das Ergebnis läßt erkennen, daß die Nylonmembrane des Marktes ein extrahierbares Antioxidans enthält und die gepfropfte Membrane dieselbe Oxidationsbeständigkeit aufweist, wie die mit Antioxidans stabilisierte.

| Probe | Anzahl der Autoklavierungen | Berstdruck (bar) |
|---|---|---|
| Nylon 6,6 ungepfropft | 0 | 0.30 |
| | 1 | 0.0 |
| Ultipor®(Pall) | 0 | 0.24 |
| | 2 | 0.25 |
| | 4 | 0.26 |
| Ultipor®(Pall), über Nacht mit Ethanol extrahiert | 0 | 0.24 |
| | 1 | 0.0 |
| Nylon 6,6, mit Hydroxyethyl-methacrylat gepfropft aus Versuch 5 | 0 | 0.45 |
| | 2 | 0.49 |
| | 4 | 0.42 |
| | 5 | 0.43 |
| Nylon 6, analog Beispiel 4 10 min mit Glycidylmethacrylat gepfropft (Pfropfgrad 10 %) | 0 | 0.35 |
| | 2 | 0.44 |
| | 4 | 0.36 |

### Beispiel 7.

Jigger-Pfropfung von Hydroxyethylmethacrylat auf Nylon 6,6-Membrane zur Herstellung eines Basismaterials für die Affinitätschromatographie.

Die Pfropfbedingungen entsprechen, soweit keine anderslautenden Angaben, denen von Beispiel 5. Die Durchflußleistung der Ausgangsmembrane betrug 37 - 43 ml/cm².min.bar. Durch Anwendung verschiedener Monomerkonzentrationen und unterschiedlicher Pfropfzeiten wurden unterschiedliche Pfropfgrade erhalten. Da die Technikumsversuche mit verschiedenen Membranchargen durchgeführt wurden, war der Schwankungsbereich der Ausgangsmembranen (Durchflußleistung, Dicke) relativ groß. Die erhaltenen Pfropfgrade sowie die Durchflußleistungen der gepfropften Membranen sind daher weniger zur strengen Dokumentation der Abhängigkeit dieser Größen von den Pfropfbedingungen geeignet, als zur Darstellung des allgemeinen Trends.

| Monomerkonzentration (%) | Pfropfdauer (min) | Pfropfgrad (%) | Durchfluß (ml/cm².min.bar) |
|---|---|---|---|
| 7.0 | 10 | 15.8 | 24 |
| 7.5 | 10 | 19.6 | 30 |
| 5.0 | 30 | 20.7 | 27 |
| 7.5 | 20 | 26.7 | 31 |
| 7.5 | 25 | 28.7 | 23 |
| 5.0 | 60 | 29.8 | 36 |
| 7.0 | 30 | 33.8 | 24 |
| 7.5 | 30 | 36.1 | 23 |
| 7.5 | 50 | 56.5 | 26 |
| 7.5 | 60 | 58.8 | 18 |

Die nach diesem Beispiel erhaltenen, gepfropften Membranen wurden in der Folge zur weiteren Modifizierung durch chemische Fixierung eines Farbstoffliganden (Reactive Blue 2) benutzt. Die Farbstoffixierung erfolgte dabei ebenfalls am Jigger, wobei eine Färbeflotte, bestehend aus 5 % Cibacronblau®F2GA (Ciba-Geigy), 10 % Harnstoff, 0.3 % Ludigol®(BASF) und 2.18 % Natriumhydroxid benutzt wurde. Die Einwirkungsdauer betrug 20 Stunden, die Reaktionstemperatur 23°C.

Die durch Fixierung des Farbstoffliganden erhaltene Affinitätsmembrane ist Gegenstand einer Parallelanmeldung. Es können auch andere synthetische und natürliche Liganden an mit hydroxylgruppenhaltigen Monomeren gepfropften Membranen fixiert werden. Die gepfropfte Membrane ist dabei als ebenso universell verwendbarer Träger für die Liganden zu betrachten, wie sie beispielsweise Agarose-Beads bei der herkömmlichen Affinitätschromatographie darstellen. Die chemischen Methoden der Fixierung sind aus der Literatur allgemein bekannt und finden sich beispielsweise bei M. Wilchek, T. Miron und J. Kohn, "Affinity Chromatography" in Methods of Enzymology 104, p. 3-55 (1984). Am Beispiel der Farbstoffliganden soll erläutert werden, auf welchem Weg die Optimierung des Trägermaterials unter Verwendung des erfindungsgemäßen Pfropfverfahrens erfolgen kann, so daß es dem Fachmann ermöglicht wird, eine derartige Optimierung auch beim Einsatz anderer Affinitätsliganden oder bei der Pfropfung anderer hydroxylgruppenhaltiger Monomerer durchzuführen.

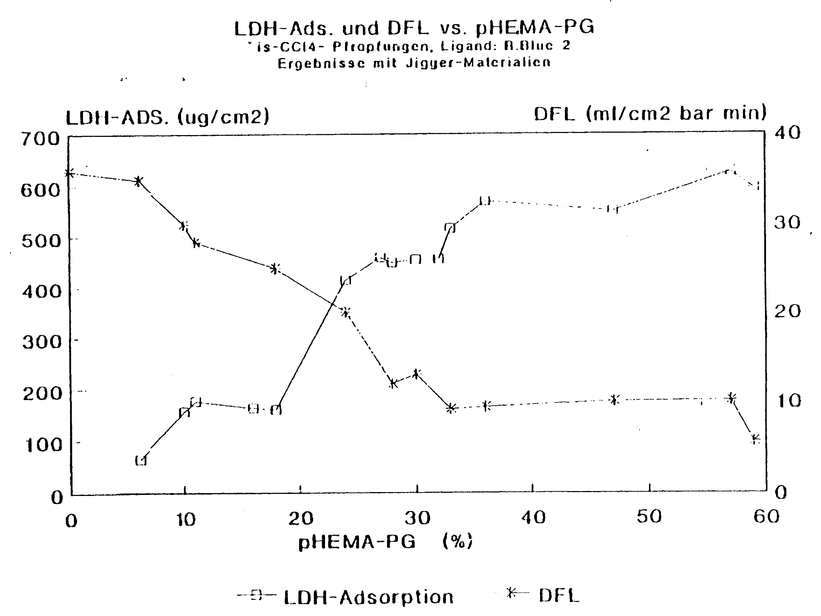

In Fig. 1 sind die Bindungskapazität für Lactatdehydrogenase (LDH) und die Durchflußleistung der erhaltenen Affinitätsmembrane in Abhängigkeit vom Pfropfgrad dargestellt. Es zeigt sich, daß ein bestimmter Mindestfropfgrad, der in dem gewählten Porengrößenbereich etwa 20 % beträgt, zur Gewährleistung einer hohen Bindungskapazität erforderlich ist, wobei der Anstieg der Bindungskapazität von einer Verminderung der Durchflußleistung begleitet ist. Die Durchflußleistung wird durch Fixierung des Farbstoffliganden an der gepfropften Membrane stark herabgesetzt.

### Beispiel 8

Benetzbarkeit von Hydroxyethylmethacrylat-gepfropften Membranen durch Flüssigkeiten hoher Oberflächenspannung.

An nach Beispiel 7 gepfropften Membranen wurde diejenige Zeit bestimmt, die zwischen dem Aufbringen von 10 µl Wasser (γ = 0.72 N/m (72 dyn/cm)) bzw. Kochsalzlösung auf der Membranoberfläche und dem vollständigen Aufsaugen der Flüssigkeit durch die Membrane verstreicht (Saugzeit). Es wurde eine 17 %ige (γ = 0.79 N/m (79 dyn/cm)) und eine gesättigte Kochsalzlösung (26 %, γ = 0.826 N/m (82.6 dyn/cm)) verwendet. Zum Vergleich wurden die ungepfropften Membranen sowie handelsübliche Nylon 6,6 - Membranen herangezogen. Bei dem Handelsprodukt "Loprodyne®" handelt es sich um ein zur Erhöhung der Hydrophilie oberflächenmodifiziertes Produkt. In der Tabelle sind die Saugzeiten in Sekunden angegeben.

| Probe | Wasser | 17 % NaCl | 26 % NaCl |
|---|---|---|---|
| ungepfropft | 33 | >3600 | keine Benetzung |
| Pfropfgrad 20 % | 17 | 70 | 220 |
| Ultipor® 0.2 µ (Pall) | 21 | >3600 | keine Benetzung |
| Loprodyne® 0.2 µ(Pall) | 20 | 210 | keine Benetzung |

Die für einen speziellen Anwendungsfall erforderliche Benetzbarkeit läßt sich bei dem erfindungsgemäßen Pfropfverfahren in weiten Grenzen einstellen, wobei sämtliche hydrophilen Monomere anwendbar sind. Dabei ist es nicht erforderlich, daß das Monomer Hydroxylgruppen aufweist. Ebenso kommen die ionischen Monomere in Frage, aber auch neutrale, wie z.B. Vinylpyrrolidon. Für die hydrophile Modifizierung kann auch Glycidylmethacrylat, das selbst keine Hydrophilierung bewirkt, gepfropft werden und anschließend zu Glycerinmethacrylat hydrolysiert werden. Das Gleiche gilt für die Pfropfung von Vinylacetat und die anschließende Verseifung zu Vinylalkohol.

### Beispiel 9

### Proteinadsorption mit verschiedenen Monomeren gepfropfter Nylon 6,6-Membranen (nominelle Porengröße 0.2 µm)

Analog Beispiel 4 (10 % Monomer, 0.1 % Na-Dithionit, 0.15 Phosphatpuffer pH 8, 1 % Tetrachlorkohlenstoff, Pfropfdauer 10 min, Raumtemperatur) wurden verschiedene Monomere gepfropft und anschließend die Adsorption von γ-Globulin bestimmt. Die Bestimmung wurde wie folgt durchgeführt: eine Membranprobe von 25 mm Durchmesser wurde 3 Stunden bei Raumtemperatur in 5 ml einer 1 %igen Lösung von γ-Globulin vom Rind in 50 mM Phosphatpuffer pH 7 geschüttelt und anschließend 5 mal je 5 Minuten in stets erneuerter proteinfreier Pufferlösung pH 7 geschüttelt. Anschließend wurde die Probe 30 Minuten in 2 ml BCA-Reagens (Pierce) mit einem Zusatz von 0.1 % Triton X geschüttelt. Nach Messung der Extinktion bei 562 nm wurde die Proteinkonzentration aus einer entsprechenden Eichgerade bestimmt und die adsorbierte Proteinmenge in µg/cm² berechnet.

| Monomer | Pfropfgrad (%) | Durchfluß (ml/cm².min.bar) | Proteinadsorpt. (µg/cm²) |
|---|---|---|---|
| ungepfropft | 0 | 16 | 183.8 |
| Diethylenglycolmethacrylat | 149.4 | n.b. | 49.8 |
| Acrylamid | 24.4 | 9.7 | 97.9 |
| Hydroxypropylmethacrylat | 94.3 | 8.9 | 50.1 |
| Hydroxypropylacrylat | 83.4 | 9.7 | 3.0 |
| Hydroxyethylacrylat | 53.8 | n.b. | 20.4 |
| Morpholinoethylmethacrylat | 49.6 | 13.0 | 11.7 |
| Hydroxyethylmethacrylat | 25.0 | 14.0 | 19.5 |

Aus diesen Werten, die an nicht weiter optimierten Produkten erhalten wurden, geht hervor, daß zur Senkung der Proteinadsorption nicht nur hydroxylgruppenhaltige Monomere, sondern auch hydroxylgruppenfreie, wie z.B. Morpholinoethylmethacrylat, mit guten Ergebnissen eingesetzt werden können.

### Beispiel 10.

Kontinuierliche Pfropfung von Glycidylmethacrylat durch Imprägnierung mit der Pfropflösung.

Ausgangsmembrane: Bahnmaterial einer Nylon 6-Membrane der nominellen Porengröße 0.45 µ.

Die Pfropfung erfolgte an einer Apparatur, die die Führung der Membranbahn nacheinander durch zwei abgedichtete Gasräume und anschließend durch eine Wässerungswanne erlaubt. Die Bahngeschwindigkeit und die Verweilstrecken wurden derart aufeinander abgestimmt, daß die Verweilzeit im ersten Gasraum 2 Minuten und im zweiten 10 Minuten betrug. Die erforderlichen Verweilstrecken wurden, um das Gesamtvolumen der Apparatur klein zu halten, über Umlenkrollen erreicht. Die Verweilzeit in der Wässerungswanne, die von RO-Wasser durchströmt wurde, betrug ebenfalls 10 Minuten.

Am Eingang des zweiten Gasraumes befand sich eine Schlitzdüse im direkten Kontakt mit der Membranbahn, durch die von außen die Pfropflösung zugeführt wurde. Der erste Gasraum war mit Stickstoff gefüllt, der mit Tetrachlorkohlenstoff gesättigt war. Dies wurde dadurch erreicht, daß der Boden dieses Raumes in einer Höhe von einigen Millimetern mit Tetrachlorkohlenstoff bedeckt war, der durch eine Heizschlange auf 35°C gehalten wurde.

Der Boden des zweiten Gasraumes war mit einer Lösung von 3% Natriumsulfit und 1% Natriumdithionit bei einen pH-Wert von 7 bedeckt, um absolute Freiheit von Sauerstoff zu gewährleisten. Die Wirksamkeit dieser Maßnahme wurde dadurch unterstützt, daß die Wände dieses Gasraumes mit Filtrierpapier belegt waren, das in die Flüssigkeit eintauchte und diese kapillar hochzog. Vor Beginn des Versuchs wurde dieser Gasraum 2 Stunden lang intensiv mit 99.999 %igem Stickstoff gespült, während des Versuchs hingegen wurde ein gelinder Stickstoffstrom aufrechterhalten.

Obwohl die Pfropfung auch mit weniger umständlichen Maßnahmen durchgeführt werden kann, ist es wesentlich, daß auch Spuren von Sauerstoff ausgeschlossen werden, wenn ein Höchstmaß an Pfropfausbeute gewährleistet werden soll. Unter Pfropfausbeute wird dabei derjenige Anteil des zugeführten Monomeren verstanden, der bei der Pfropfung gebunden wird. Sie beträgt bei sorgfältiger Durchführung der beschriebenen Maßnahmen und ausreichender Verweilzeit der Materialbahn im zweiten Gasraum praktisch 100 %, was nicht nur für einen ökonomischen Einsatz des Monomeren, sondern auch im Hinblick auf geltendes Recht (Umweltverschmutzung durch Monomer im Spülwasser) von Bedeutung ist.

Die Zufuhr der Pfropflösung wurde auf das Maß eingestellt, das eine vollständige Tränkung der Membranbahn ergab. Eine kontinuierliche Pfropfung ergab unter diesen Bedingungen annähernd 100 % Pfropfausbeute, wenn als Pfropflösung entweder eine gesättigte Lösung von Glycidylmethacrylat in einer 0.1 %igen Lösung von Natriumdithionit in 0.1 M Phosphatpuffer pH 7, einer 10 %igen Emulsion von Glycidylmethacrylat oder in einer 10 %igen Lösung von Glycidylmethacrylat in einem Gemisch von 30 % Aceton und 0.1 % Natriumdithionit 0.1 M Phosphatpuffer pH 7 durchgeführt wurde. Zur Herstellung der Glycidylmethacrylat-Emulsion wurden 0.2 % eines Emulgators (Arlatone®G, ICI) eingesetzt.

Der Pfropfgrad betrug im Falle der wäßrigen Glycidylmethacrylatlösung (Löslichkeit des Monomeren in Wasser: 2.5 %) 5.4 %, bei der Emulsion 20.8 % und bei dem Aceton-Puffer-System 19.9 %. Wenn man eine Flüssigkeitsaufnahme der Materialbahn von 220 % zugrundelegt, die in einem getrennten Versuch bestimmt wurde, ergibt sich im ersten Fall eine Pfropfausbeute von 98 %, im zweiten von 94.5 und im dritten von 90.5 %.

## Patentansprüche

1. Verfahren zum Pfropfen eines stickstoffhaltigen Polymers, an dessen Stickstoffatomen substituierbare Wasserstoffatome sitzen, mit ethylenisch ungesättigten Monomeren oder Gemischen aus ethylenisch ungesättigten Monomeren, wobei man das Polymer in einem Wasser und ein Reduktionsmittel enthaltenden Pfropfmedium zur Reaktion bringt,
**dadurch gekennzeichnet**,
daß man die Reaktion in Gegenwart von Tetrachlorkohlenstoff durchführt.

2. Verfahren nach Anspruch 1, dadurch gekennzeichnet, daß man das Polymer als Materialbahn einsetzt.

3. Verfahren nach Anspruch 1, dadurch gekennzeichnet, daß man dem Propfmedium Tetrachlorkohlenstoff als Bodenkörper zusetzt.

4. Verfahren nach Anspruch 1, dadurch gekennzeichnet, daß man das Pfropfmedium mit Tetrachlorkohlenstoff sättigt.

5. Verfahren nach Anspruch 2, dadurch gekennzeichnet, daß man die Materialbahn vor dem Pfropfen mit Tetrachlorkohlenstoff oder mit einem Gemisch aus einem flüchtigen Lösungsmittel und Tetrachlorkohlenstoff benetzt.

6. Verfahren nach Anspruch 2, dadurch gekennzeichnet, daß man die Materialbahn vor dem Pfropfen durch eine mit Tetrachlorkohlenstoff gesättigte Atmosphäre führt.

7. Verfahren nach Anspruch 6, dadurch gekennzeichnet, daß man eine Verweilzeit in der mit Tetrachlorkohlenstoff gesättigten Atmosphäre von 10 sec bis 10 min wählt.

8. Verfahren nach Anspruch 7, dadurch gekennzeichnet, daß man das Sättigen des Gasraumes mit Tetrachlorkohlenstoff bei einer Temperatur von 0 bis 50 °C durchführt.

9. Verfahren nach Anspruch 2, dadurch gekennzeichnet, daß man das Beladen der Materialbahn mit Tetrachlorkohlenstoff in der Gasphase nach Imprägnieren mit dem Pfropfmedium bewirkt.

10. Verfahren nach Anspruch 2, dadurch gekennzeichnet, daß man die Materialbahn mit dem Pfropfmedium imprägniert.

11. Verfahren nach Anspruch 10, dadurch gekennzeichnet, daß man die Monomeren des Pfropfmediums in emulgiertem Zustand zusetzt.

12. Verfahren nach Anspruch 4, dadurch gekennzeichnet, daß man das Pfropfen diskontinuierlich in einem Jigger unter Stickstoffatmosphäre durchführt.

13. Verfahren nach Anspruch 6 oder 10, dadurch gekennzeichnet, daß man das Pfropfen auf einer Verweilstrecke in Stickstoffatmosphäre durchführt.

14. Verfahren nach Anspruch 13, dadurch gekennzeichnet, daß man die Länge der Verweilzeit derart wählt. daß eine Pfropfausbeute der Monomeren von im wesentlichen 100 % erreicht wird.

15. Verfahren nach den vorhergehenden Ansprüchen, dadurch gekennzeichnet, daß man die Reaktion bei Raumtemperatur durchführt.

16. Verfahren nach den vorhergehenden Ansprüchen, dadurch gekennzeichnet, daß man als stickstoffhaltige Polymere aliphatische oder aromatische Polyamide, Polysulfonamide, Polyurethane oder Polymere verwendet, die den Stickstoff nicht in der Hauptkette, sondern in der Seitenkette aufweisen.

17. Verfahren nach den vorhergehenden Ansprüchen, dadurch gekennzeichnet, daß man als ethylenisch ungesättigte Monomere hydroxylgruppenhaltige Monomere verwendet.

18. Verfahren nach den vorhergehenden Ansprüchen, dadurch gekennzeichnet, daß man als ethylenisch ungesättigte Monomere
Diethylenglycolmethacrylat,
Hydroxypropylmethacrylat,
Hydroxyethylmethacrylat,
Methacrylamidoglycolatmethylether,
Hydroxyethylacrylat,
Hydroxypropylacrylat,
Glycidylmethacrylat
Morpholinoethylmethacrylat,
Glycerinmethacrylat,
Acrylamid,
Vinylacetat,
Octaethylenglycolmethacrylat,
Sulfopropylmethacrylat,
Tris-(hydroxymethyl)methacrylamid,
Trimethylammonium-2-hydroxypropylmethacrylatchlorid,
N-Morphofinopropylmethacrylamid,
Acrylsäure,
Dimethylaminoethylmethacrylat,
Vinylpyrrolidon,
Methacrylamid,
2-Acrylamido-2-methylpropansulfonsäure oder
Vinylimidazol
verwendet, wobei man bei Verwendung von Vinylacetat oder Glycidylmethacrylat das Monomer nach dem Pfropfen wahlweise zu Vinylalkohol bzw. Glycerinmethacrylat hydrolisiert.

19. Verfahren nach den vorhergehenden Ansprüchen, dadurch gekennzeichnet, daß man als Reduktionsmittel Natriumdithionit, Rongalit bei Temperaturen oberhalb von 40 °C, Rongalit in Kombination mit EDTA-komplexiertem Fe²⁺ bei etwa pH = 10, Ascorbinsäure im alkalischen Bereich oder Hydrazin einsetzt.

20. Verfahren nach Anspruch 19, dadurch gekennzeichnet, daß man Natriumdithionit in einer Konzentration von 0,02 bis 1 % bei pH = 6 bis 10 einsetzt.

21. Verfahren nach Anspruch 19 oder 20, dadurch gekennzeichnet, daß man das Redoxpotential mißt und durch Zudosieren eines Konzentrats des Reduktionsmittels konstant hält.

22. Verfahren nach den vorhergehenden Ansprüchen, dadurch gekennzeichnet, daß man Formkörper aus stickstoffhaltigem Polymer an der Oberfläche pfropft.

23. Verfahren nach Anspruch 22, dadurch gekennzeichnet, daß man Formkörper in Gestalt von Folien, Kapilaren, Fasern oder daraus hergestellten Geweben, Vliesen oder mikroporösen Membranen einsetzt.

24. Verfahren nach Anspruch 23, dadurch gekennzeichnet, daß man Fasern mit einem Dickenbereich von 1 bis 100 µm und einem Oberflächen/Massen-Verhältnis von 0,4 bis 4 m²/g einsetzt.

25. Mit ethylenisch ungesättigten Monomeren gepfropfte Formkörper aus stickstoffhaltigen Polymeren, dadurch gekennzeichnet, daß die Formkörper durch Pfropfen von als mikroporöse Membranen ausgebildeten Formkörpern mit einem Oberflächen/Massen-Verhältnis im Bereich zwischen 5 und 50 m²/g hergestellt sind und
a) durch einen Pfropfgrad von 1 bis 5 % in den Oberflächeneigenschaften,
b) durch einen Pfropfgrad von 5 bis 45 % in der adsorptiven Bindungskapazität oder
c) durch einen Pfropfgrad von 10 bis 700 % in den Bulkeigenschaften modifiziert sind.

26. Gepfropfte Formkörper nach Anspruch 25, dadurch gekennzeichnet, daß aufgepfropften Monomere Acrylate oder Methacrylate von Polyolen sind, vorzugsweise solche des Ethylenglycols, des Glycerins, des Diethylenglycols, des Octaethylenglycols oder des Propylenglycols.

27. Verwendung gepfropfter Formkörper gemäß den vorhergehenden Ansprüchen für die adsorptive Bindung.

28. Verwendung nach Anspruch 27, dadurch gekennzeichnet, daß man nach Pfropfung hyoroxylgruppenhaltiger Monomerer synthetische oder natürliche Liganden für die Affinitätschromatographie fixiert, vorzugsweise einen synthetischen Farbstoffliganden fixiert.

29. Verwendung nach Anspruch 27, dadurch gekennzeichnet, daß man einen mit Glycidylmethacrylat gepfropften Formkörper zur Bindung von Substanzen einsetzt, die eine Reaktivität gegenüber Epoxidgruppen aufweisen, oder einen nach Anspruch 18 mit Methacrylamidoglycolatmethylether gepfropften Formkörper zur Bindung von Substanzen einsetzt, die eine Reaktivität gegenüber Aminogruppen aufweisen.

## Claims

1. Process for grafting a polymer, which contains nitrogen and at the nitrogen atoms of which sit substitutable hydrogen atoms, with ethylenically unsaturated monomers or mixtures of ethylenically unsaturated monomers, wherein one brings the polymer into reaction in a grafting medium containing water and a reducing agent, characterised thereby, that one performs the reaction in the presence of carbon tetrachloride.

2. Process according to claim 1, characterised thereby, that one deploys the polymer as material web.

3. Process according to claim 1, characterised thereby, that one adds carbon tetrachloride as precipitate to the grafting medium.

4. Process according to claim 1, characterised thereby, that one saturates the grafting medium with carbon tetrachloride.

5. Process according to claim 2, characterised thereby, that one wets the material web with carbon tetrachloride or with a mixture of a volatile solvent and carbon tetrachloride before the grafting.

6. Process according to claim 2, characterised thereby, that one conducts the material web through an atmosphere, which is saturated by carbon tetrachloride, before the grafting.

7. Process according to claim 6, characterised thereby, that one chooses a dwell time of 10 seconds to 10 minutes in the atmosphere, which is saturated by carbon tetrachloride.

8. Process according to claim 7, characterised thereby, that one performs the saturation of the gas space with carbon tetrachloride at a temperature of 0° to 50°C.

9. Process according to claim 2, characterised thereby, that one causes the loading of the material web with carbon tetrachloride in the gas phase after impregnation with the grafting medium.

10. Process according to claim 2, characterised thereby, that one impregnates the material web with the grafting medium.

11. Process according to claim 10, characterised thereby, that one adds the monomers of the grafting medium in the emulsified state.

12. Process according to claim 4, characterised thereby, that one performs the grafting discontinuously in a jigger under a nitrogen atmosphere.

13. Process according to claim 6 or 10, characterised thereby, that one performs the grafting over a dwell path section in a nitrogen atmosphere.

14. Process according to claim 13, characterised thereby, that one chooses the length of the dwell time in such a manner that a grafting yield of the monomers of substantially 100% is achieved.

15. Process according to the preceding claims, characterised thereby, that one performs the reaction at room temperature.

16. Process according to the preceding claims, characterised thereby, that one uses aliphatic or aromatic polyamides, polysulphonamides, polyurethanes or polymers, which display the nitrogen not in the main chain, but in the side chain, as polymers containing nitrogen.

17. Process according to the preceding claims, characterised thereby, that one uses monomers containing a hydroxyl group as ethylenically unsaturated monomers.

18. Process according to the preceding claims, characterised thereby, that one uses
diethylene glycol methacrylate,
hydroxypropyl methacrylate
hydroxyethyl methacrylate,
methacryl amidoglycolate methyl ether,
hydroxyethyl acrylate,
hydroxypropyl acrylate
glycidyl methacrylate,
morpholine ethyl methacrylate,
gylcerol methacrylate,
acryl amide,
vinyl acetate,
octaethylene gylcol methacrylate
sulfopropyl methacrylate
tri-(hydroxymethyl) methacrylamide,
trimethyl ammonium-2-hydroxypropyl methacrylate chloride,
N- morpholinopropyl methacrylamide,
acrylic acid,
dimethyl aminoethyl methacrylate,
vinyl pyrrolidone
methacrylamide,
2-acrylamide-2-methylpropane sulphonic acid or
vinyl imidazole
as ethylenically unsaturated monomers, wherein one hydrolyses the monomer selectably into vinyl alcohol or glycerol methacrylate after the grafting in the case of the use of vinyl acetate or glycidyl methacrylate.

19. Process according to the preceding claims, characterised thereby, that one deploys sodium dithionite, rongalite at temperatures above 40°C, rongalite in combination with EDTA-complexed Fe²⁺ at a pH of about 10, ascorbic acid in the alkaline range or hydrazine as reducing agent.

20. Process according to the preceding claims, characterised thereby, that one deploys sodium dithionite in a concentration of 0.02 to 1% at a pH of 6 to 10.

21. Process according to claim 19 or 20, characterised thereby, that one measures the redox potential and keeps it constant by admetering a concentrate of the reducing agent.

22. Process according to the preceding claims, characterised thereby, that one grafts shaped bodies of polymers, which contain nitrogen, at the surface.

23. Process according to claim 22, characterised thereby, that one deploys shaped bodies in the structure of foils, capillary tubes or fibres, or fabrics, fleeces or microporous membranes, which are made from these.

24. Process according to claim 23, characterised thereby, that one deploys fibres in a thickness range of 1 to 100 micrometres and with a surface-to-mass ratio of 0.4 to 4 square metres per gram.

25. Shaped bodies of polymers containing nitrogen and grafted with ethylenically unsaturated monomers, characterised thereby, that the shaped bodies are produced by grafting of shaped bodies, which are constructed as microporous membranes, with a surface-to-mass ratio in the region between 5 and 50 square metres per gram and modified
a) by a grafting degree of 1 to 5% in the surface properties,
b) by a grafting degree 5 to 45% in the adsorptive bonding capacity or
c) by a grafting degree of 10 to 700% in the bulk properties.

26. Grafted shaped bodies according to claim 25, characterised thereby, that grafted-on monomers are acrylates or methacrylates of polyols, preferably such of the ethylene glycol, the glycerol, the diethylene glycol, the octaethylene glycol or the propylene glycol.

27. Use of grafted shaped bodies according to the preceding claims for the adsorptive bonding.

28. Use according to claim 27, characterised thereby, that one fixes synthetic or natural ligands for the affinity chromatography, preferably a synthetic dye ligand, after grafting monomers containing a hydroxyl group.

29. Use according to claim 27, characterised thereby, that one deploys a shaped body grafted with glycidyl methacrylate for the bonding of substances which display a reactivity to epoxide groups or a shaped body grafted according to claim 18 with methacryl amidoglycolate methyl ether for the bonding of substances which display a reactivity to amino groups.

## Revendications

1. Procédé pour le greffage d'un polymère azoté, dont les atomes d'azote portent des atomes d'hydrogène pouvant être substitués, avec des monomères éthyléniquement insaturés ou des mélanges de monomères éthyléniquement insaturés, dans lequel on fait réagir le polymère dans un milieu de greffage contenant de l'eau et un agent réducteur, caractérisé en ce qu'on effectue la réaction en présence de tétrachlorure de carbone.

2. Procédé selon la revendication 1, caractérisé en ce qu'on utilise le polymère sous la forme d'une bande de matériau.

3. Procédé selon la revendication 1, caractérisé en ce qu'on ajoute du tétrachlorure de carbone sous la forme d'un dépôt au milieu de greffage.

4. Procédé selon la revendication 1, caractérisé en ce qu'on sature le milieu de greffage avec du tétrachlorure de carbone.

5. Procédé selon la revendication 2, caractérisé en ce qu'on humidifie la bande de matériau, avant le greffage, avec du tétrachlorure de carbone ou avec un mélange de solvant volatil et de tétrachlorure de carbone.

6. Procédé selon la revendication 2, caractérisé en ce qu'on amène la bande de matériau, avant le greffage, dans une atmosphère saturée de tétrachlorure de carbone.

7. Procédé selon la revendication 6, caractérisé en ce qu'on choisit un temps de séjour de 10 secondes à 10 minutes dans l'atmosphère saturée de tétrachlorure de carbone.

8. Procédé selon la revendication 7, caractérisé en ce qu'on effectue la saturation de l'espace gazeux avec du tétrachlorure de carbone à une température comprise entre 0 et 50°C.

9. Procédé selon la revendication 2, caractérisé en ce qu'on charge la bande de matériau avec du tétrachlorure de carbone en phase gazeuse après l'imprégnation avec le milieu de greffage.

10. Procédé selon la revendication 2, caractérisé en ce qu'on imprègne la bande de matériau avec le milieu de greffage.

11. Procédé selon la revendication 10, caractérisé en ce qu'on ajoute les monomères du milieu de greffage à l'état émulsionné.

12. Procédé selon la revendication 4, caractérisé en ce qu'on effectue le greffage de façon discontinue dans un appareil jigger, dans une atmosphère d'azote.

13. Procédé selon la revendication 6 ou 10, caractérisé en ce qu'on effectue le greffage sur une trajectoire de séjour dans une atmosphère d'azote.

14. Procédé selon la revendication 13, caractérisé en ce qu'on choisit la durée du temps de séjour d'une manière telle qu'on atteint un rendement de greffage des monomères de pratiquement 100 %.

15. Procédé selon les revendications précédentes, caractérisé en ce qu'on effectue la réaction à la température ambiante.

16. Procédé selon les revendications précédentes, caractérisé en ce qu'on utilise, comme polymères azotés, des polyamides, des polysulfonamides, des polyuréthannes ou des polymères, aliphatiques ou aromatiques, qui ne contiennent pas l'azote dans la chaîne principale, mais dans la chaîne latérale.

17. Procédé selon les revendications précédentes, caractérisé en ce qu'on utilise, comme monomères éthyléniquement insaturés, des monomères contenant des groupes hydroxyle.

18. Procédé selon les revendications précédentes, caractérisé en ce qu'on utilise, comme monomères éthyléniquement insaturés, le méthacrylate de diéthylèneglycol, le méthacrylate d'hydroxypropyle, le méthacrylate d'hydroxyéthyle, l'éther méthylique de méthacrylamidoglycolate, 1' acrylate d' hydroxyéthyle, l'acrylate d'hydroxypropyle, le méthacrylate de glycidyle, le méthacrylate de morpholinoéthyle, le méthacrylate de glycérol, l'acrylamide, l'acétate de vinyle, le méthacrylate d'octaéthylèneglycol, le méthacrylate de sulfopropyle, le tris(hydroxyméthyl)méthacrylamide, le chlorure de méthacrylate de triméthylammonium-2-hydroxypropyle, le N-morpholinopropylméthacrylamide, l'acide acrylique, le méthacrylate de diméthylaminoéthyle, la vinylpyrrolidone, le méthacrylamide, l'acide 2-acrylamido-2-méthylpropanesulfonique ou le vinylimidazole, et quand on utilise l'acétate de vinyle ou le méthacrylate de glycidyle, éventuellement, on hydrolyse le monomère, après le greffage en alcool vinylique ou en méthacrylate de glycérol.

19. Procédé selon les revendications précédentes, caractérisé en ce qu'on utilise, comme agent réducteur, le dithionite de sodium, la Rongalite à des températures supérieures à 40°C, la Rongalite combinée avec Fe²⁺ formant un complexe avec EDTA à pH d'environ 10, l'acide ascorbique dans la plage alcaline ou l'hydrazine.

20. Procédé selon la revendication 19, caractérisé en ce qu'on utilise le dithionite de sodium à une concentration de 0,02 à 1 % à pH = 6 à 10.

21. Procédé selon la revendication 19 ou 20, caractérisé en ce qu'on mesure le potentiel d'oxydoréduction et on le maintient à une valeur constante grâce à l'addition dosée d'un concentré de l'agent réducteur.

22. Procédé selon les revendications précédentes, caractérisé en ce qu'on greffe des articles moulés à base de polymère azoté sur la surface.

23. Procédé selon la revendication 22, caractérisé en ce qu'on utilise des articles moulés sous la forme de feuilles, de tubes capillaires, de fibres ou de tissés fabriqués à partir de fibres, de non-tissés ou de membranes microporeuses.

24. Procédé selon la revendication 23, caractérisé en ce qu'on utilise des fibres ayant une épaisseur comprise entre 1 et 100 µm et un rapport de surface/poids de 0,4 à 4 m²/g.

25. Articles moulés greffés avec des monomères éthyléniquement insaturés, à base de polymères azotés, caractérisés en ce qu'ils sont préparés par greffage d'articles moulés ayant la forme de membranes microporeuses ayant un rapport de surface/poids compris entre 5 et 50 m²/g et modifiés.
a) par un taux de greffage de 1 à 5 % en ce qui concerne les propriétés superficielles,
b) par un taux de greffage de 5 à 45 % en ce qui concerne la capacité de liaison par adsorption, ou
c) par un taux de greffage de 10 à 700 % en ce qui concerne les propriétés volumiques.

26. Articles moulés greffés selon la revendication 25, caractérisés en ce que les monomères ajoutés par greffage sont des acrylates ou des méthacrylates de polyols, de préférence les acrylates ou les méthacrylates de l'éthylèneglycol, du glycérol, du diéthylèneglycol, de l'octaéthylèneglycol ou du propylèneglycol.

27. Utilisation d'articles moulés greffés selon les revendications précédentes pour la liaison par adsorption.

28. Utilisation selon la revendication 27, caractérisée en ce qu'après le greffage de monomères contenant des groupes hydroxyle, on fixe des ligands synthétiques ou naturels pour la chromatographie, de préférence on fixe un ligand synthétique de colorant.

29. Utilisation selon la revendication 27, caractérisée en ce qu'on utilise un article moulé greffé avec le méthacrylate de glycidyle pour la liaison de substances qui ont une réactivité vis-à-vis des groupes époxy, ou un article moulé greffé avec l'éther méthylique de méthacrylamidoglycolate selon la revendication 18 pour la liaison de substances qui ont une réactivité vis-à-vis des groupes amino.
